(19) Europäisches Patentamt / European Patent Office / Office européen des brevets

(11) **EP 3 591 784 B1**

(12) **FASCICULE DE BREVET EUROPEEN**

(45) Date de publication et mention de la délivrance du brevet:
**21.12.2022 Bulletin 2022/51**

(21) Numéro de dépôt: **18305899.9**

(22) Date de dépôt: **06.07.2018**

(51) Classification Internationale des Brevets (IPC):
**H02J 3/01** *(2006.01)* **H02J 3/14** *(2006.01)*
**H02J 3/18** *(2006.01)* **H02J 3/38** *(2006.01)*
**H02M 1/12** *(2006.01)*

(52) Classification Coopérative des Brevets (CPC):
**H02J 3/01; H02J 3/14; H02J 3/1821; H02J 3/381;**
**H02M 1/12;** H02J 2300/26; H02J 2310/12;
H02J 2310/14; Y02B 70/3225; Y02E 10/56;
Y02E 40/30; Y02E 40/40; Y02P 80/10; Y04S 20/222

(54) **DISPOSITIF DE COMPENSATION ELECTRIQUE ACTIVE**

VORRICHTUNG ZUR AKTIVEN ELEKTRISCHEN KOMPENSATION

ACTIVE ELECTRICAL COMPENSATION DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**08.01.2020 Bulletin 2020/02**

(73) Titulaires:
• **ENSEA - Ecole Nationale Supérieure de
L'Electronique et de ses Applications
95800 Cergy (FR)**
• **The University of Alabama in Huntsville
Huntsville, AL 35899 (US)**

(72) Inventeurs:
• **ALALI, Mohamad Alaa Eddin
95300 PONTOISE (FR)**
• **SHTESSEL, Yuri
Owens Cross Roads, AL Alabama 35763 (US)**
• **BARBOT, Jean-Pierre
95320 SAINT-LEU-LA-FORET (FR)**

(74) Mandataire: **Regimbeau
20, rue de Chazelles
75847 Paris Cedex 17 (FR)**

(56) Documents cités:
**CN-A- 102 299 556** **CN-U- 201 813 171**
**US-A1- 2013 030 590** **US-A1- 2016 329 714**

• **ALALI MHD A E ET AL: "A Lyapunov approach
based higher order sliding mode controller for
grid connected shunt active compensators with
a LCL filter", 2017 19TH EUROPEAN
CONFERENCE ON POWER ELECTRONICS AND
APPLICATIONS (EPE'17 ECCE EUROPE),
JOINTLY OWNED IEEE-PELS AND EPE
ASSOCIATION, 11 septembre 2017 (2017-09-11),
XP033250489, DOI:
10.23919/EPE17ECCEEUROPE.2017.8099107
[extrait le 2017-11-06]**

**Description**

## DOMAINE TECHNIQUE GÉNÉRAL ET ART ANTÉRIEUR

L'invention concerne le domaine général de l'électronique de puissance et de ses applications sur les réseaux électriques de distribution ou embarqués, les bâtiments intelligents et les micro-réseaux, et plus particulièrement des modules de filtrage et de compensation des réseaux électriques et à injection de puissance d'origines renouvelables.

Il est bien connu que la qualité du signal électrique délivré par le réseau de distribution a une conséquence directe sur les performances des systèmes alimentés par ce réseau, ainsi que la durée de vie des équipements électriques qui constituent le réseau ou qui y sont raccordés.

Notamment, la distorsion harmonique, le déphasage entre la tension et l'intensité, soit le réactif, ainsi que le déséquilibre des courant et tension sont des facteurs permettant d'exprimer la qualité de l'énergie transitant dans ce réseau.

Il est entendu par déséquilibre une différence dans les grandeurs physiques du signal entre les différentes phases, par exemple des niveaux de tension, d'intensité ou de déphasage.

Le taux de distorsion harmonique est une mesure de la linéarité du traitement du signal effectuée en comparant le signal en sortie d'un appareil à un signal d'entrée sinusoïdal.

La non-linéarité du système déforme cette sinusoïde. Le signal de sortie reste un signal périodique qui peut s'analyser en une somme de sinusoïdes de fréquences multiples de celle donnant la période, appelée fréquence fondamentale.

Chacune de ces sinusoïdes est un harmonique de rang égal au quotient de sa fréquence par la fréquence fondamentale. Le taux de distorsion harmonique est le rapport des valeurs efficaces entre la fréquence fondamentale et les autres.

Un appareil comportant des charges non linéaires connecté à un réseau électrique reçoit une puissance du réseau électrique et réinjecte un signal dans le réseau, le signal réinjecté dans le réseau étant dégradé par le fonctionnement de l'appareil.

Il est entendu par charge non linéaire une charge à base de composants d'électronique de puissance consommant sur le système d'alimentation de la puissance active (avec ou sans puissance réactive) ainsi et surtout de la puissance déformante (liée aux harmoniques). Ces harmoniques peuvent être à rangs conventionnels (5, 7, 11, 13, etc.) pour les systèmes d'alimentation à 3 fils : charges non linéaires triphasées (largement répandues dans les zones industrielles). Dans le cas des charges non linéaires monophasées installées dans un système d'alimentation à 4 fils (3 phases et le neutre) largement employées dans les zones résidentielles, commerciales ou administratives, des harmoniques de rang 3 et leurs multiples impaires (3, 9, 15, etc.) vont circuler dans ce réseau en plus des harmoniques conventionnels.

D'autre part, le déphasage entre la tension et l'intensité du signal implique l'apparition d'une puissance réactive qui entraîne, entre autres, la diminution de la puissance active transmissible dans le réseau.

Le développement des technologies de production d'énergie, notamment d'origine renouvelable, a entraîné l'apparition de nombreuses unités de production individuelles, notamment dans les solutions d'habitations dites à énergie positive.

Lorsqu'une unité de production de puissance, notamment dans le cas d'énergies renouvelables de type solaire ou éolien, est connectée au réseau, il est nécessaire de recourir à un ou plusieurs onduleurs ou redresseurs-onduleurs afin de gérer et convertir la puissance générée par l'unité en courant continu et tension continue en signal alternatif, avant de l'injecter dans le réseau.

Les onduleurs, constitués le plus souvent d'interrupteurs électroniques commandés à l'ouverture et à la fermeture et bidirectionnels, tels que les IGBT (IGBT, de l'anglais *Insulated Gate Bipolar Transistor* ou transistor bipolaire à grille isolée) et les GTO (GTO, de l'anglais *Gate Turn-off Thyristor* ou thyristor à extinction par la gâchette). Par un jeu de commutations commandées de manière appropriée (généralement une modulation de largeur d'impulsion), on module la source afin d'obtenir un signal alternatif de la fréquence désirée.

Les fréquences de commutation des composants d'électronique de puissance des onduleurs induisent généralement des composantes harmoniques à hautes fréquences dans le signal injecté dans le réseau, ce qui dégrade la qualité du signal transitant dans le réseau.

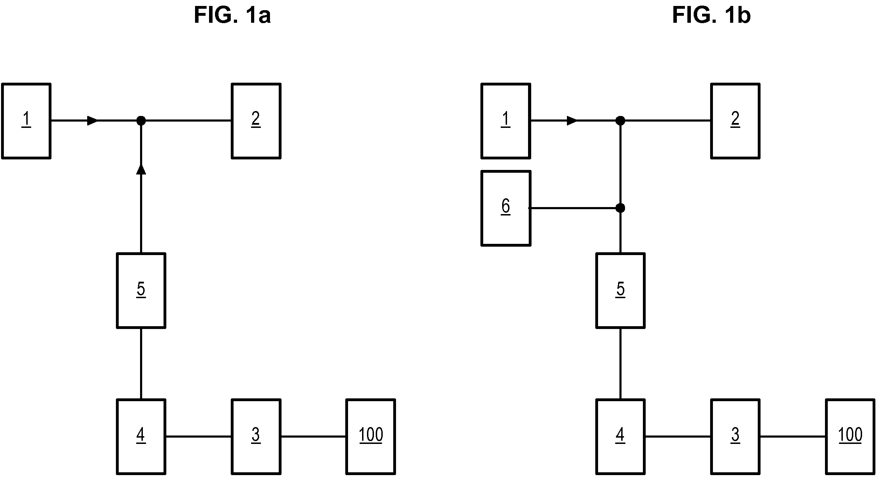

Dans un ensemble tel que représenté en figure 1a, comprenant un réseau général 1, une charge non linéaire 2, et une source de puissance 3 connectée à un onduleur 4, il est connu de connecter en sortie de l'onduleur 4 un filtre 5 configuré pour bloquer les composantes à hautes fréquences de commutation contenues dans le signal à injecter dans le réseau électrique 1.

Ainsi, les harmoniques à hautes fréquences du signal causés par la commutation de l'onduleur 4, ne sont pas transmises via le filtre 5 au réseau 1 ; seul le signal souhaité est généré par l'onduleur 4 et injecté au réseau 1 ou à la charge 2.

Différentes structures de filtre 5 ont été proposées à cet effet.

Un filtre de premier ordre, le plus classiquement utilisé ; composé d'une simple inductance de résistance interne pratiquement négligeable, tel que représenté en figure 1b, ne permet notamment pas de remplir cette fonction.

En effet, plus l'inductance d'un tel filtre est élevée, plus la capacité du filtre à empêcher les composantes dues à la commutation d'être injectées sur le réseau 1 est élevée. Cependant, plus l'inductance est élevée, plus la vitesse de variation de l'intensité transitant dans le filtre est réduite et plus le filtre va occasionner un déphasage entre l'intensité réelle souhaitée et l'intensité à injecter à l'ensemble réseau 1 - charge 2 via le filtre 5.

Inversement, une valeur faible de l'inductance permet à la majorité des composantes dues à la commutation d'être injectée dans le réseau 1 et par conséquent d'affecter les installations et les équipements électriques.

Le bon dimensionnement du filtre de sortie du premier ordre dépendra donc du compromis à trouver entre la dynamique et l'efficacité du dispositif à base de l'onduleur surtout quand il fonctionne en tant que filtre actif parallèle à dépollution harmonique.

Ce compromis est très difficile à fixer sans l'emploi d'un filtre passif auxiliaire 6 installé à la sortie du filtre de sortie 5 ou en amont du côté réseau, pour filtrer les composantes à hautes fréquences tel que représenté en figure 1b.

Cependant, ce filtre auxiliaire 6 peut causer des effets secondaires non désirés comme la résonance avec d'autres éléments passifs installés sur le réseau électrique 1.

Ces phénomènes de résonance électrique entraînent dans certains cas des pics de tension ou d'intensité largement supérieurs aux valeurs admissibles par les appareils connectés au réseau 1 et provoquent la destruction de ces appareils.

Ce filtre auxiliaire occasionne également une consommation de puissance active par sa résistance d'amortissement. De plus, la qualité de filtrage de ces filtres auxiliaires se dégrade avec le temps à cause du vieillissement de ses éléments passifs.

Le document US2016/329714A1 décrit un système de commande d'une source d'énergie connectée à un réseau électrique, le système comprenant un convertisseur, un filtre de grille d'ordre n (n entier supérieur ou égal à 2) couplé au réseau électrique et au convertisseur et un contrôleur à boucle imbriquée couplé au convertisseur, le contrôleur ayant des boucles de commande interne et externe, une boucle d'axe d commandant la puissance réelle et une boucle d'axe q commandant la puissance réactive, la boucle de commande interne comprenant un réseau neuronal configuré pour optimiser des tensions de commande dq pour commander le convertisseur, le réseau neuronal tenant compte de la dynamique du filtre de grille d'ordre n et optimisant les tensions de commande dq.

Le document « A Lyapunov Approach Based Higher Order Sliding Mode Controller for Grid Connected Shunt Active Compensators with a LCL Filter » ALALI MHD AE et al.XP033250489, propose d'utiliser un contrôleur à modulation de largeur d'impulsion d'ordre supérieur et à fenêtre glissante fondé sur une approche de Lyapunov, le contrôleur jouant le rôle d'un filtre actif triphasé à trois fils connecté à un réseau via un filtre LCL, le contrôleur fonctionnant à une fréquence fixe.Le document CN 201 813 171 U décrit un contrôleur d'un dispositif photovoltaïque comprenant un onduleur triphasé et un filtre électrique LCL.

Le document US2013/0030590 A1 décrit un procédé de gestion des pics d'une consommation d'énergie d'un site vers une charge comprenant, lorsque la consommation dépasse un seuil, l'alimentation de la charge par une source d'énergie tant qu'un niveau d'énergie de la source dépasse un niveau minimum, la réduction de la consommation de la charge et le rechargement de la source d'énergie.

Le document CN 102 299 556 A décrit un système de surveillance en temps réel d'un équipement électrique, le système étant configuré pour superviser une consommation électrique de l'équipement et rendre l'équipement plus économe en énergie.

## PRÉSENTATION GÉNÉRALE DE L'INVENTION

Un but de l'invention est de « dépolluer » le courant consommé par une charge non linéaire, en annulant, du côté réseau 1, son contenu harmonique, le contenu déséquilibré ainsi que le contenu réactif du courant dans l'objectif d'améliorer la qualité de la tension du côté réseau électrique. Cette invention, ayant une structure à 4 fils, est adaptée au spectre harmonique contenant les rangs conventionnels (5, 7, 11, 13, etc.) des zones industrielles ainsi que ceux du rang 3 et leurs multiples impaires (3, 9, 15, etc.) des zones résidentielles, commerciales ou administratives.

Un autre but est de maximiser la puissance active productible par une unité de génération d'énergie renouvelable.

Un autre but est d'optimiser la consommation d'énergie d'un bâtiment intelligent.

Un autre but est d'optimiser la production énergétique d'une unité de production d'énergie conventionnelle au sein d'un micro-réseau.

Un autre but est d'optimiser la gestion de l'énergie transitant entre les unités de production (renouvelable et conventionnelle) et les unités de consommation.

Afin d'y parvenir, l'invention propose un dispositif de compensation de courant du type filtre actif parallèle à génération d'énergie renouvelable, apte à être connecté en parallèle entre un réseau électrique donné et des charges électriques non linéaires/linéaires, et en aval d'au moins une unité de puissance à génération d'énergie renouvelable couplée à un élément de stockage d'énergie selon la revendication 1.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure la est un schéma représentant un réseau électrique alimentant une charge et une unité de puissance à génération d'énergie renouvelableconnecté à un onduleur, via un ou plusieurs éléments de stockage capacitif, comportant un filtre selon l'art antérieur ; la figure 1b représente ce même réseau avec une autre structure de filtre de l'art antérieur ;

- la figure 2 est un schéma représentant un réseau électrique alimentant une charge avec un onduleur, inclus dans un dispositif de compensation active selon l'invention ;

- la figure 3 est un schéma représentant la structure d'un dispositif de compensation active selon l'invention, notamment la structure de l'unité de contrôle-commande ;

- la figure 4 est un schéma représentant un système électrique selon l'invention, dans lequel le dispositif de compensation s'insère, en parallèle, entre une unité de production d'énergie renouvelable, au sein d'un bâti d'autoconsommation, et l'ensemble réseau-charges ;

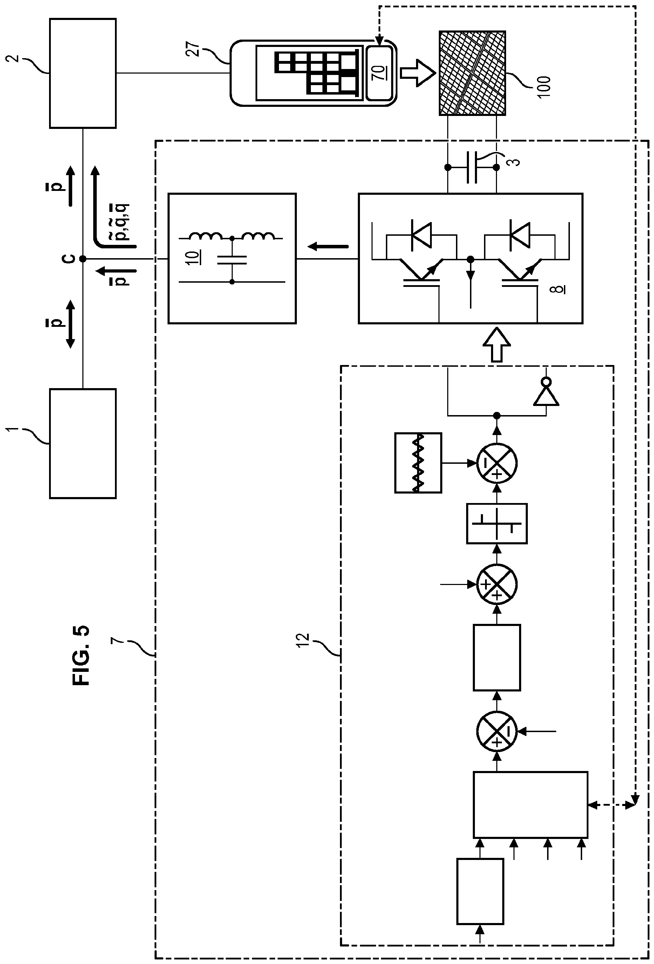

- la figure 5 est un schéma représentant un système électrique selon un mode de réalisation de l'invention, dans lequel le système est connecté à un bâtiment intelligent ;

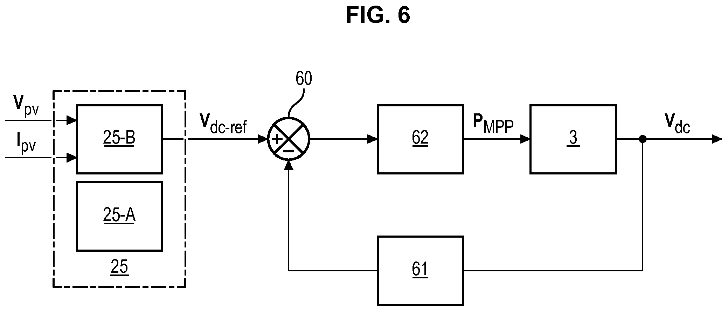

- la figure 6 représente la boucle de régulation de l'élément de stockage capacitif dans l'objectif, entre autres, d'extraire la puissance maximale active de l'unité de puissance à génération d'énergie renouvelable;

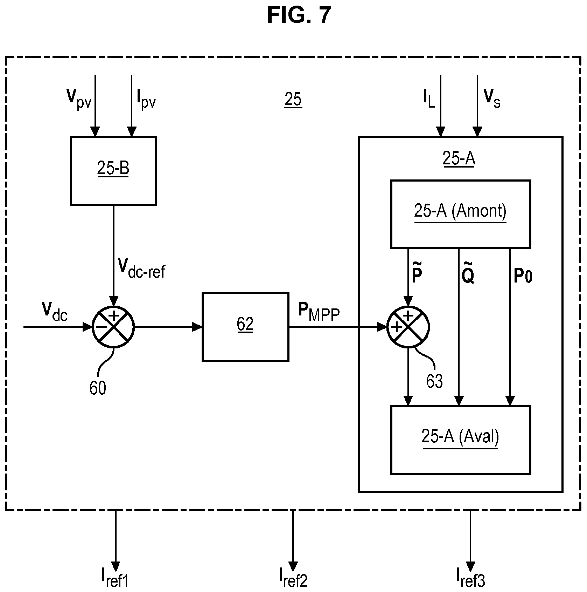

- la figure 7 représente l'intégration de la méthode de calcul de cette puissance maximale active dans l'algorithme d'identification/calcul des courants non actifs (harmoniques, réactifs et déséquilibré) ;

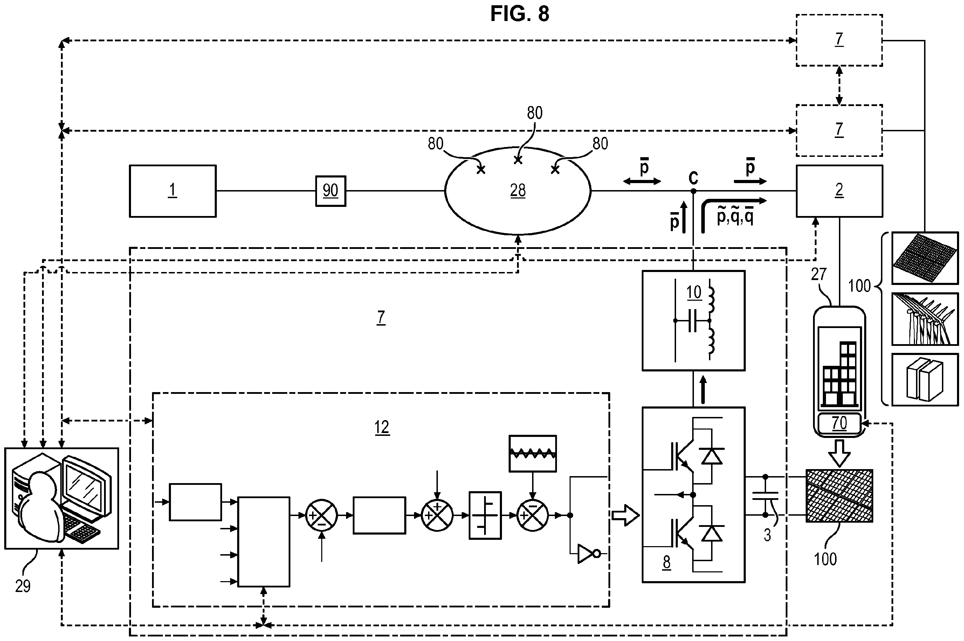

- la figure 8 est un schéma représentant un système électrique selon un deuxième mode de réalisation de l'invention, dans lequel le système électrique comprend un système de gestion semi-centralisé qui gère la production d'énergie conventionnelle du réseau ainsi, qu'en cas d'urgences, le mode de fonctionnement des unités centralisées, composées par les dispositifs de compensation active associées aux unités de production d'énergie renouvelable ;

- la figure 9 représente une structure générale du filtre actif parallèle selon l'invention ;

- la figure 10 représente un schéma équivalent par phase du filtre de sortie du troisième ordre LCL selon l'invention ;

- la figure 11 représente le diagramme du gain du filtre de sortie du troisième ordre LCL ;

- la figure 12 représente un schéma blocs général de l'algorithme de contrôle du courant du filtre actif;

- la figure 13 représente un effet du déphasage sur la qualité de compensation du filtre actif ; plus particulièrement la figure 13a représente l'intensité de la charge, la figure 13b représente le courant de consigne et le courant injecté, et la figure 13c représente le courant du réseau avec l'effet du déphasage ainsi que le courant idéal estimé sans l'effet du déphasage ;

- la figure 14 représente les diagrammes du gain et de la phase de la fonction de transfert de la boucle de contrôle du filtre actif avec RST qui est un contrôleur linéaire basé, entre autres, sur un placement des pôles du la boucle de régulation ;

- la figure 15 représente la poursuite et le signal de commande monophasé avec les contrôleurs à mode glissant utilisant les fonctions de commande Signe, Sigmoïde et augmentation artificielle du degré relatif ;

- la figure 16 représente un schéma électrique du site industriel étudié ;

- la figure 17 représente une photo de l'analyseur de la qualité d'énergie installée dans le site étudié ;

- la figure 18 représente un modèle de la charge globale de la ligne de production de l'usine étudiée ;

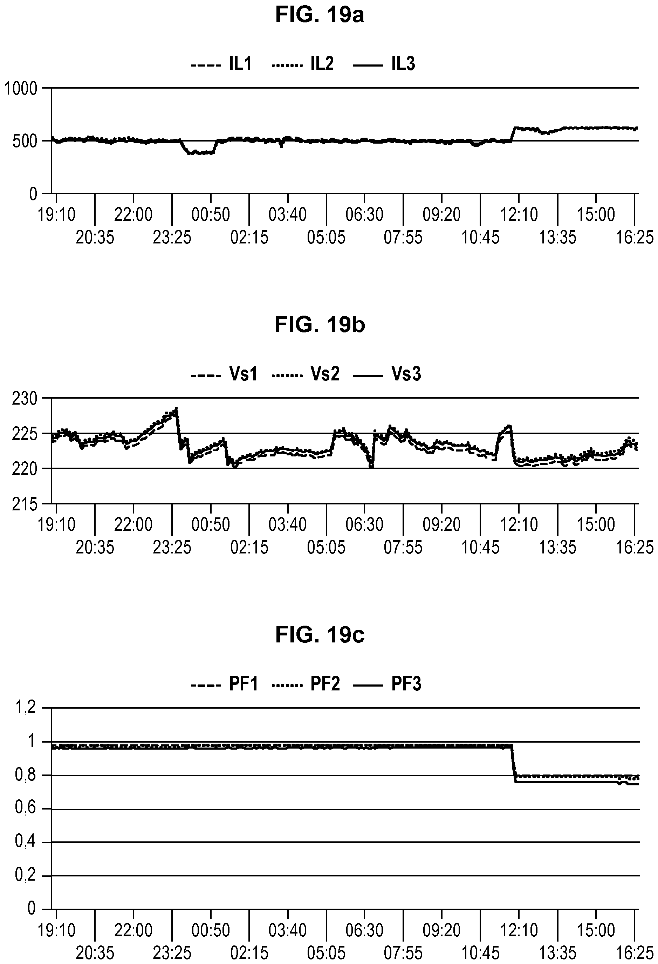

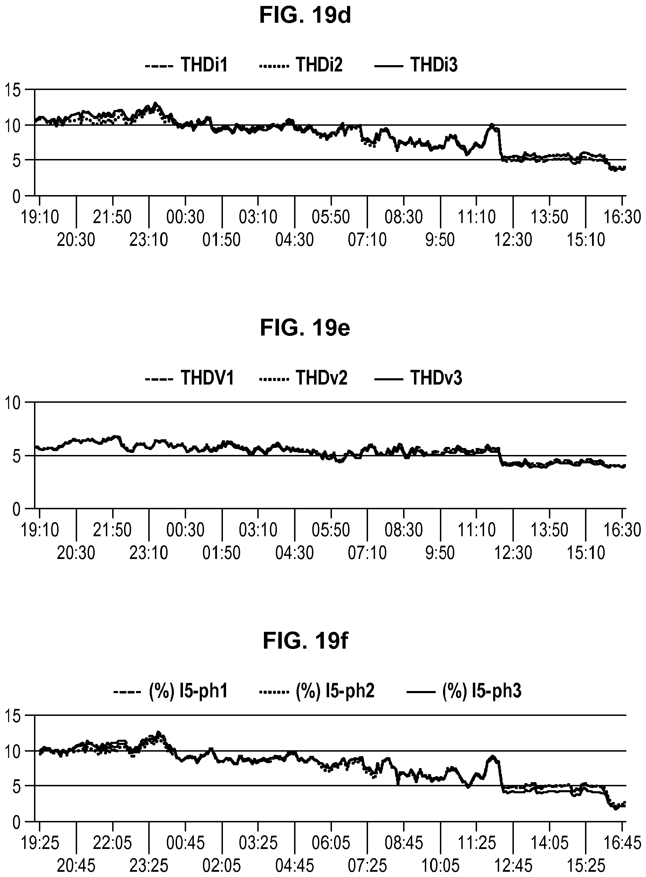

- les figures 19a à 19i représentent les courbes de mesure délivrées par l'analyseur de la qualité d'énergie ; plus précisément la figure 19a représente les tracés triphasées (Ph1, Ph2 et Ph3) des courants de la charge totale IL123 en A ; la figure 19b représente les tensions du réseau électrique Vs123 en V ; la figure 19c représente les facteurs de puissance PF123 ; la figure 19d représente les distorsions harmoniques totales THD des courants de la charge totale THDi123 en % ; la figure 19e représente les distorsions harmoniques totales des tensions du réseau THDv123 en % ; les figures 19f à 19i représentent respectivement les taux de distorsion harmonique individuels pour les rangs 5, 7, 11 et 13 des courants des charges pour chacune des phases, les taux de distorsion étant exprimés en % ;

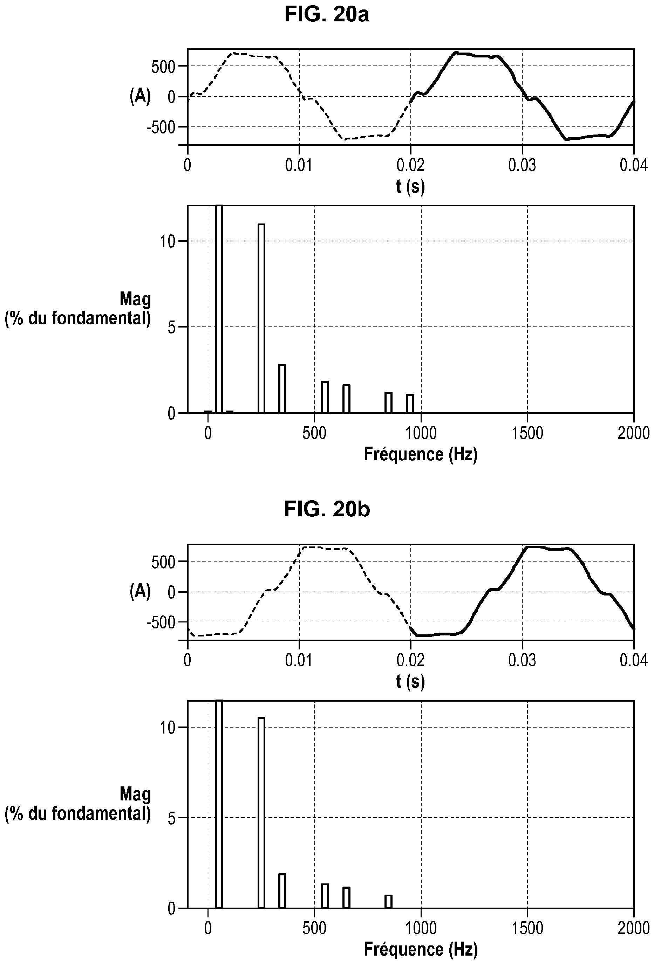

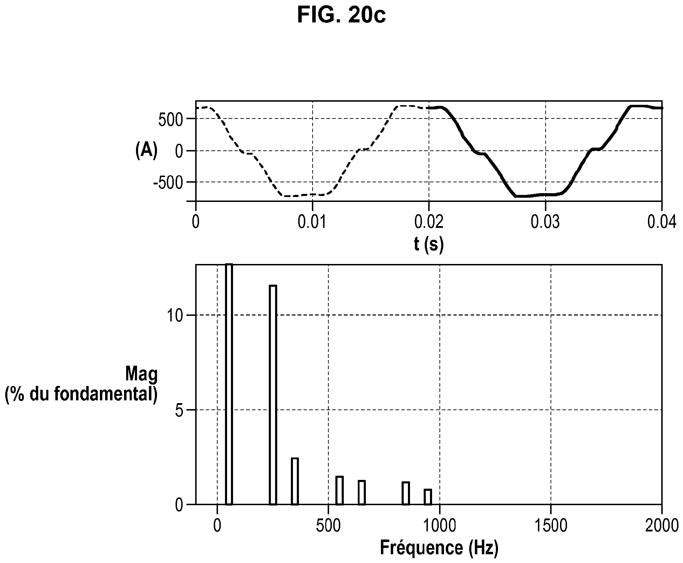

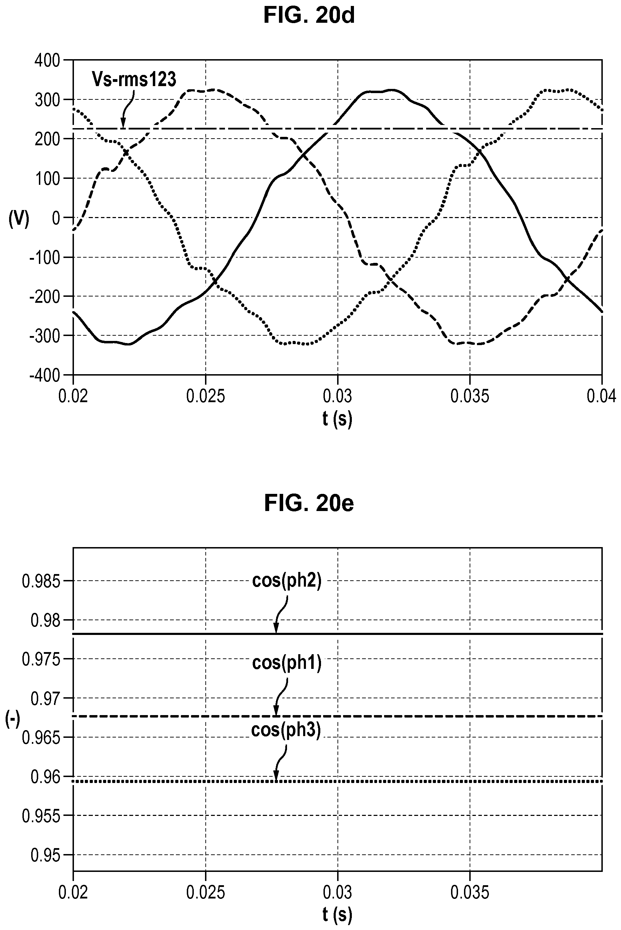

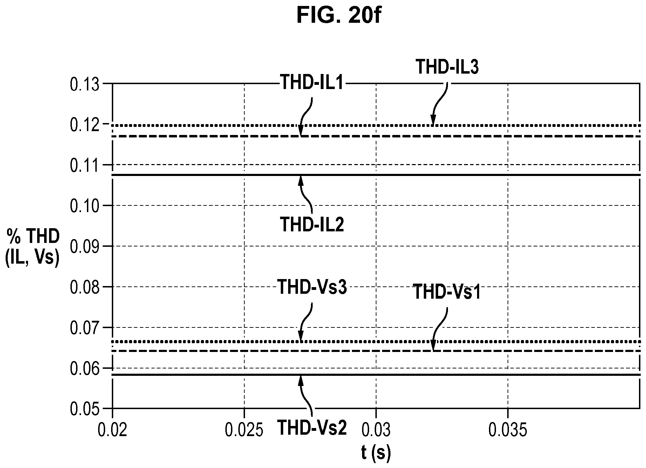

- les figures 20a à 20f représentent les résultats de simulation pour la validation du modèle proposé; en particulier la figure 20a représente les courants de la charge totale sur la phase ph1 ainsi que les harmoniques ; la figure 20b représente les courants de la charge totale sur la phase ph2 ainsi que les harmoniques ; la figure 20c représente les courants de la charge totale sur la phase ph3 ainsi que les harmoniques ; la figure 20d représente les tensions simples du réseau; la figure 20e représente les facteurs de puissance ; la figure 20f représente les taux de distorsion harmonique sur les différentes phases, et notamment le THD-V, ainsi que le THD-I;

- la figure 21 représente le filtrage du courant du réseau étudié en employant les contrôleurs à mode glissant utilisant les fonctions de commande Signe, Sigmoïde et augmentation artificielle du degré relatif ;

- la figure 22 représente le filtrage de la tension du réseau étudié en employant les contrôleurs à mode glissant utilisant les fonctions de commande Signe, sigmoïde et augmentation artificielle du degré relatif ;

- la figure 23 représente les caractéristiques courant-tension et puissance tension d'un générateur photovoltaïque ;

- la figure 24 représente une boucle de régulation de la tension continue ;

- la figure 25 représente un algorithme d'identification des courants perturbateurs intégrant la poursuite du point de puissance maximale.

## DESCRIPTION D'UN OU PLUSIEURS MODES DE MISE EN ŒUVRE ET DE RÉALISATION

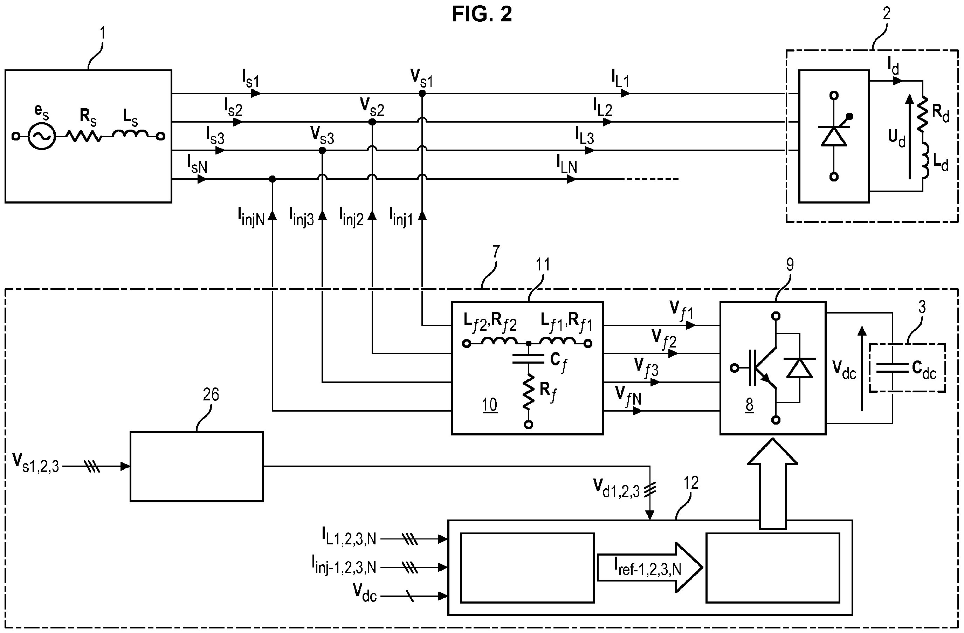

L'invention concerne un système électrique tel que représenté en figures 2-3, comprenant un réseau 1 d'alimentation à 3 phases et un neutre, une charge 2 non linéaire ou linéaire ou les deux connectées au réseau 1, un élément de stockage capacitif d'énergie 3, une unité de puissance à génération d'énergie renouvelable 100 et un ensemble de compensation 7 connecté d'une part à la sortie de l'unité de puissance à génération d'énergie renouvelable 100 associée à l'élément de stockage 3 et d'autre part en parallèle entre le réseau 1 et la charge 2.
L'ensemble de compensation 7 comporte :

- une unité de conversion 8 de puissance, comportant un onduleur 9,

- une unité de filtrage 10, comportant au moins un filtre 11 de type LCL associant donc deux inductances, et un condensateur,

- une unité de contrôle-commande 12 configurée pour identifier et contrôler le courant injecté au réseau 1 et commander l'onduleur 9 pour générer ce courant.

L'unité de contrôle-commande 12 est configurée pour commander l'onduleur 9 de manière à ce que l'onduleur 9 génère un signal d'intensité $I_{inj}$ configurée pour annuler, au point de raccordement C, les perturbations du signal générées par la charge 2 et injectées au réseau.
Le signal émis en sortie de l'unité de filtrage 10, et donc en sortie de l'ensemble de compensation 7, présente donc les harmoniques du signal causés par la partie non linéaire de la charge 2.
Pour tout harmonique n présent dans le signal perturbateur, causé par la charge 2, le signal émis par l'unité de filtrage 10 présente une valeur de tension inverse (en opposition de phase) à la valeur de tension du signal de la charge 2 non linéaire à cet harmonique n.

Ainsi, en injectant le signal de sortie de l'ensemble de compensation 7 au point de raccordement C, les harmoniques du signal émis par la charge 2 non linéaire sont annulés et le courant transitant du côté réseau 1 est dépourvu d'harmoniques.

De manière similaire, le signal de sortie de l'ensemble de compensation 7 présente, pour la fréquence fondamentale et les harmoniques, un déphasage configuré pour générer une puissance réactive inverse à la puissance réactive du signal perturbateur de la charge 2.

De cette manière, la puissance réactive consommée par la charge 2 est fortement compensée du côté réseau.

L'unité de contrôle commande 12 est en outre configurée pour compenser le déséquilibre du signal transitant dans la charge 2 non linéaire ou linéaire.

Il est entendu par déséquilibre une consommation de courant différente en fonction des différentes phases de plusieurs charges 2 monophasées.

L'ensemble de compensation 7 est configuré pour être installé dans un réseau électrique déjà pollué au niveau de sa tension en amont tout en offrant la possibilité de fonctionner à deux fréquences fondamentales (50 et 60 Hz), qui peuvent varier chacune de $\pm$ 10%, tout en étant capable de s'adapter aux variations de tension de $\pm$ 15%.

Cela permet un fonctionnement correct de l'ensemble de compensation 7 même dans le cas de groupes électrogènes se substituant au réseau électrique.

L'unité de contrôle commande 12 est en outre configurée pour réguler (charger et maintenir constante) la tension $V_{dc}$ aux bornes de l'élément de stockage capacitif 3.

L'unité de contrôle commande 12 est en outre configurée pour détecter le point de puissance maximale MPPT (de l'anglais *Maximum Power Point Tracking*) d'une unité de puissance à génération d'énergie renouvelable 100 et générer, via l'onduleur 9, le courant actif correspondant à cette puissance maximale ; la tension $V_{dc}$ aux bornes de l'élément de stockage capacitif 3 est égale, dans ce cas, à la tension de la puissance maximale de l'unité 100 de production d'énergie renouvelable.

### L'unité de conversion 8

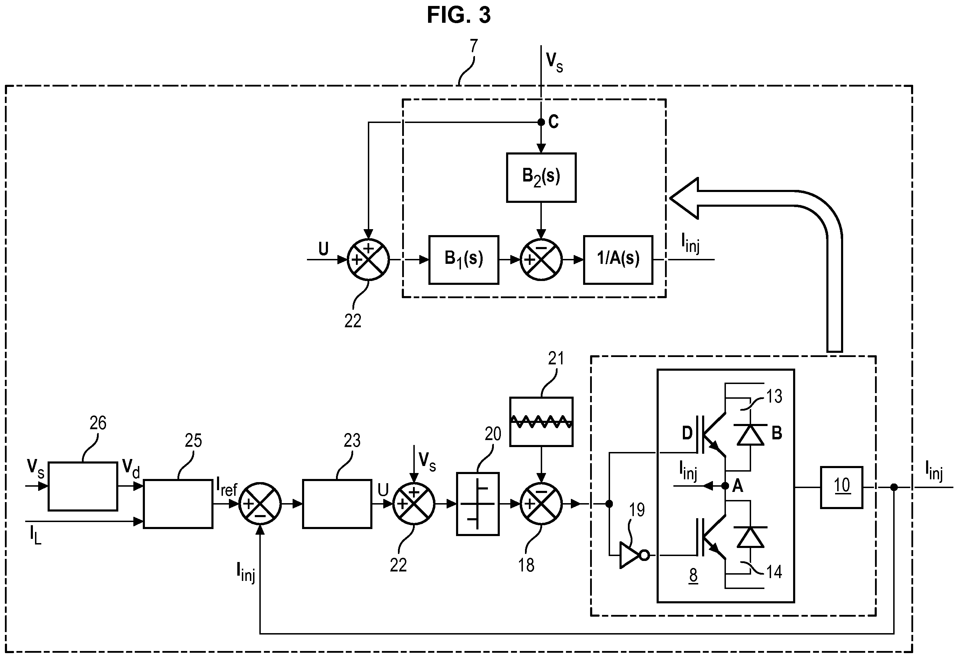

L'unité de conversion 8 comporte, tel que représenté en figures 2 et 3, l'onduleur 9 à 3 phases et un neutre qui présente une structure similaire à un onduleur de tension classique à deux niveaux de tension, de manière à assurer la fiabilité et minimiser les coûts de la structure.

L'onduleur 9 est ici piloté par l'unité de contrôle-commande 12 de manière à occuper, avec les unités 3 et 11, une fonction de filtre actif parallèle.

L'onduleur 9, à 4 fils et à 4 bras, comporte pour chacun des 4 bras, deux dispositifs de commutation 13 et 14 connectés chacun d'une part à une borne de sortie de l'élément de stockage capacitif 3 et d'autre part à un point de connexion commun A auquel un des 4 fils est également connecté.

Ce point de connexion situé, pour chaque bras, entre le premier dispositif de commutation 13 et le deuxième dispositif de commutation 14 forme un point de connexion d'un des 4 fils de l'onduleur 9 connecté à l'autre extrémité l'unité de filtrage 10 dont la sortie est connectée au point de raccordement C.

Chaque dispositif de commutation est composé d'un interrupteur d'électronique de puissance D, commandable à l'ouverture et à la fermeture (IGBT, GTO ou d'autres) et d'une diode en antiparallèle B (fonctionnement bidirectionnel).

L'onduleur 9 émet, sur chaque fil, un signal présentant une intensité $I_{inj}$.

L'onduleur 9 est configuré pour injecter des puissances qui couvrent une large bande de fréquence, comprise entre la fréquence du fondamental, par exemple 50 Hz, jusqu'au rang harmonique 50, présentant dans l'exemple d'un fondamental de 50 Hz une fréquence de 2500 Hz.

### L'unité de filtrage 10

L'unité de filtrage 10 comprend dans ce mode de réalisation un filtre 11 de type LCL, qui présente l'avantage d'être facile à mettre en œuvre par rapport à un filtre de premier ordre, volumineux, lourd et coûteux.

Le filtre 11 comporte donc, sur chacune des 4 fils (trois phases avec le neutre), une première inductance 15 connectée d'une part à un fil d'entrée de l'unité de filtrage 10 (sortant d'un des 4 points de connexion commun A), et donc et d'autre part à une deuxième inductance 16, la deuxième inductance 16 étant connectée d'autre part à un des 4 points de raccordement C via un fil de sortie l'unité de filtrage 10.

Le filtre 11 associé à chaque fil comporte en outre un condensateur 17 connecté d'une part à un point commun E et d'autre part à un point de connexion F entre la première inductance 15 et la deuxième inductance 16.

Le filtre 11 permet d'empêcher la propagation des composantes dues à la fréquence de commutation de l'onduleur 9 au réseau 1 d'alimentation sans dégrader la dynamique du système de compensation 7. Il permet donc de limiter le risque de résonnance, et ainsi de se passer d'un filtre passif auxiliaire destiné à la limitation de cette propagation, dans le cas de l'emploi d'un filtre de sortie du premier ordre (une inductance simple) associé à ce filtre auxiliaire.

L'unité de contrôle commande 12

L'unité de contrôle-commande 12 est configurée pour identifier et contrôler le courant injecté, via l'unité de filtrage 10, aux points de raccordement C pour les 4 fils et pour commander l'onduleur 9 pour générer ce courant. L'identification des courants à injecter aux points de raccordement C se fait par l'unité de calcul des courants de références 25.

Le courant à injecter aux points de raccordement C comporte le courant actif de l'unité de puissance à génération d'énergie renouvelable100 ainsi que des courants non actifs perturbateurs, pouvant présenter des harmoniques, du déséquilibre, et du réactifs, configurés pour s'opposer aux harmoniques, au déséquilibre et au réactif du signal transitant dans la charge 2 de manière à les réduire, voire les annuler.

Le contrôleur 23 assure la poursuite du courant entre le courant injecté $I_{inj}$ et le courant de référence issu de l'unité 25.

Enfin, l'unité de pilotage 21 assure la commande des interrupteurs de l'onduleur 9 afin de générer $I_{inj}$.

Le fonctionnement et la structure de l'unité de contrôle 12 seront par la suite décrits pour une phase. Il est entendu que chacun des 4 fils (les trois phases ainsi que le neutre) est piloté de manière similaire par l'unité de contrôle 12, qui comporte donc une chaîne de contrôle-commande par fil.

Pour la commande des dispositifs de commutation 13, 14 d'un fil, l'unité de contrôle commande 12 comporte donc deux sorties, l'une connectée au pôle de déclenchement du premier dispositif de commutation 13, l'autre étant connectée au pôle de déclenchement de la deuxième unité de commutation 14.

Les deux sorties sont connectées conjointement à la sortie d'un comparateur logique 18, de manière à commander simultanément la commutation des deux dispositifs de commutation 13, 14.

L'une des sorties de l'unité de contrôle-commande 12 comporte un inverseur de niveau logique 19, de manière à ce que l'activation d'un des dispositifs de commutation 13, 14 entraîne la désactivation de l'autre, avantageusement au cours d'une unique impulsion de commande grâce à leur connexion commune, en amont de l'inverseur de niveau logique 19, à un même comparateur 18.

Le comparateur 18 émet un signal logique de sortie correspondant à la comparaison entre un signal de sortie d'un élément de saturation 20 et un signal de sortie d'un dispositif de pilotage de commutation 21.

Le dispositif de pilotage de commutation 21 émet un signal (appelé une onde porteuse) à une fréquence prédéterminée, en fonction du dimensionnement des unités 9, 10 et 3, de manière à provoquer la commutation des dispositifs de commutation 13, 14.

Dans la plupart des cas, les lois de commande, conçues pour contrôler les onduleurs de tension qui sont connectés au réseau électrique via un filtre LCL, ont été à l'origine établies pour les systèmes d'énergie renouvelable (photovoltaïque et éolien).

Dans ce cas, les contrôleurs linéaires peuvent être proposés car l'onduleur a uniquement des composantes fondamentales (une puissance active) à injecter au réseau, le déphasage entre le signal identifié $I_{ref}$ via l'unité de calcul des courants de référence 25 et celui injecté $I_{inj}$ étant négligeable dans ce cas.

Cependant, dans le cas d'un filtre actif parallèle, l'onduleur 9 doit injecter au réseau électrique à la fois des composantes fondamentales (réactive et déséquilibrée) et harmoniques, ce qui implique une maîtrise totale d'une très large bande passante de fréquence. Un déphasage important limite l'applicabilité des contrôleurs linéaires dans le cas d'un filtrage harmonique.

Un contrôle non-linéaire du courant injecté $I_{inj}$ permet de surmonter ce problème de déphasage, rencontré lors de l'emploi d'un filtre LCL associé à un contrôleur linéaire.

Dans ce mode de réalisation, le contrôleur 23 effectue un contrôle par mode glissant (en anglais *Sliding mode control* ou SMC), ce qui permet d'assurer une réponse dynamique souhaitée, une forte robustesse /insensibilité aux perturbations bornées ainsi que de bonnes propriétés de contrôle dans une large gamme de conditions de fonctionnement.

Il est bien connu qu'un contrôle par mode glissant classique avec une fonction dite Signe (*sign* en anglais), génère une commande des interrupteurs de l'onduleur à très haute fréquence (commande discontinue), afin d'assurer une convergence en temps fini vers la surface de glissement où les états du système sont maintenus par la suite, même en présence de perturbations bornées.

La fonction Signe d'un signal est donnée par la relation :

$$sign\, u = \frac{u}{|u|}$$

En pratique, l'onduleur de tension est commandé par une fonction de commutation à fréquence limitée, fixe ou variable. Des commutations à très hautes fréquences causent une surchauffe qui peut aller jusqu'à la destruction de l'onduleur.

Afin d'éviter le fonctionnement en mode de commande discontinue, cette invention emploie deux contrôleurs par mode glissant à commande continue, l'un étant associé à une fonction Signe approximée en fonction sigmoïde et l'autre étant associé à une méthode d'augmentation artificielle du degré relatif, suivie par un intégrateur. Les deux contrôleurs sont associés à deux surfaces de glissement appropriées.

La première méthode consiste à remplacer la fonction Signe par une approximation continue. Il s'agit d'une fonction Signe approximée en une fonction Sigmoïde donnée par la formule :

$$sign\ \mathrm{u} = \frac{\mathrm{u}}{|\mathrm{u}| + \varepsilon}$$

avec $\varepsilon$ l'épaisseur du voisinage de la surface de glissement.

Le système, dans ce cas, ne converge plus vers la valeur désirée, mais vers un voisinage de cette dernière, ce qui permet de limiter les commutations à très hautes fréquences.

La méthode d'augmentation artificielle du degré relatif consiste à augmenter l'ordre de la surface de glissement d'un degré (conduisant à une dérivée supplémentaire), ce qui permet d'insérer à la sortie de la fonction Signe un intégrateur, la commande dans ce cas devient continue. En effet, en dérivant une fois de plus l'erreur de poursuite entre le signal $I_{ref}$ identifié par l'unité 25 et le courant injecté $I_{inj}$, le signal à la sortie de la fonction Signe représente la dérivée de la commande (discontinue jusqu'ici). Une action intégrale à la sortie de la fonction Signe générera une commande continue.

Les deux contrôleurs employés permettent d'éviter une discontinuité de la commande, notamment causée par des commutations variables de l'onduleur à très hautes fréquences, causées par un contrôle à mode glissant classique.

Optionnellement mais avantageusement, le dispositif de pilotage de commutation 21 comporte un dispositif de modulation de largeur d'impulsion, dans lequel la commande est comparée à une onde porteuse à fréquence de commutation prédéterminée en fonction du dimensionnement des unités 9, 10 et 3.

Cela permet de faire fonctionner l'onduleur 9 à une fréquence de commutation fixe.

Un effet synergique est obtenu en améliorant de ce fait la rétention des composantes à hautes fréquences, dues aux commutations, par le filtre 11 de type LCL.

Un élément de saturation 20 est classiquement configuré pour imposer des limites haute et basse sur le signal de commande. Ces limites sont déterminées par l'amplitude de l'onde porteuse qui est liée, à son tour, à la tension de l'élément de stockage capacitif 3.

Le signal d'entrée de l'élément de saturation 20 provient de la sortie d'un sommateur 22, dont le signal de sortie est la somme d'une tension de commande u émise par un contrôleur 23 et de la tension Vs du point de raccordement C. Le rajout de la tension $V_s$ dans la boucle de contrôle du courant injecté $I_{inj}$ empêche un fort appel de courant réactif de la part des inductances du filtre LCL 11.

L'unité de calcul des courants de référence 25 comporte une pluralité d'entrées mesurées.

Les grandeurs du système qui sont mesurées comportent :

- l'intensité $I_L$ du courant de chaque fil consommé par la charge 2,

- l'intensité $I_{inj}$ du courant de chaque fil sortant de l'unité de filtrage 10,

- la tension $V_{dc}$ aux bornes de l'élément de stockage capacitif 3, qui est également la tension de la puissance maximale de sortie de l'unité de puissance à génération d'énergie renouvelable 100,

- la tension Vs de chacune des phases au niveau des points de raccordement C, par l'intermédiaire d'une boucle à verrouillage de phase (PLL) 26. La boucle à verrouillage de phase 26 est utilisée pour extraire la composante positive triphasée $V_{d123}$ de la tension du réseau 1 au niveau des points de raccordement C,

- l'intensité $I_{pv}$ du courant de l'unité de puissance à génération d'énergie renouvelable 100,

- la tension $V_{pv}$ de l'unité de puissance à génération d'énergie renouvelable 100,

L'unité de calcul des courants de référence 25 comporte une sortie pour chaque phase, chaque sortie correspondant à la chaîne de contrôle-commande de la phase associée, ladite chaîne de contrôle-commande comprenant un comparateur 24, un contrôleur 23, un sommateur 22, un élément de saturation 20 et un comparateur logique 18 dont la sortie se divise en deux branches dont l'une comporte un inverseur de niveau logique 19.

L'unité de calcul des courants de référence 25 émet donc un signal de consigne par phase présentant une intensité $I_{ref}$.

L'intensité $I_{inj}$ de chaque phase du signal émis par l'onduleur 9 est retournée à l'unité de contrôle 12 et comparée avec la consigne $I_{ref}$ de la chaîne de contrôle-commande de la phase correspondante. La différence entre $I_{ref}$ et $I_{inj}$ est corrigée via le contrôleur 23 qui émet la commande u.

La tension $V_{dc}$ est régulée (maintenue constante) en la comparant, via un comparateur 60, avec une tension de référence $V_{dc-ref}$, qui est égale à la tension du point de puissance maximale $V_{MPP}$ de l'unité de puissance à génération d'énergie renouvelable 100.

Le signal mesuré de la tension $V_{dc}$ est filtré des fluctuations à 300 Hz ou autres, via un filtre passe-bas du deuxième ordre 61. Le signal d'erreur ($V_{dc-ref}$ - $V_{dc}$) est contrôlé par un contrôleur PI (Proportionnel Intégral) 62 afin d'obtenir la puissance maximale PMPP.

La tension Vs du réseau 1 est ajoutée dans le sommateur 22 à la commande u, la sortie du sommateur 22 étant limitée dans l'élément de saturation 20, la sortie de l'élément de saturation 20 étant comparée via le comparateur logique 18 avec le signal délivré par le dispositif de modulation de largeur d'impulsion 21 (la porteuse).

Le signal de sortie du comparateur 18 est à un niveau 1 si le signal de sortie de l'élément de saturation 20 est plus grand que la porteuse. Autrement il est à un niveau 0. Suivant cette chaîne logique, le dispositif de commutation 13 ou 14, qui ne comporte pas d'inverseur de niveau logique 19, est respectivement fermé ou ouvert (l'autre dispositif fonctionnant d'une façon complémentaire).

L'unité contrôle-commande 12 comporte au moins un processeur et au moins une mémoire, la mémoire comprenant un programme exécuté par le processeur de manière à mettre en œuvre le procédé de détermination du signal de consigne $I_{ref}$, contenant le courant non actif ainsi que le courant $I_{MPP}$ du point de puissance maximale MPPT, via l'unité de calcul des courants de référence 25, du contrôle de courant injecté $I_{inj}$ via l'unité 23 de contrôle et de générer ce courant injecté en commandant les dispositifs 13, 14 de chaque fil de l'onduleur 9 via l'unité de pilotage 21.

Le procédé de détermination du signal de consigne $I_{ref}$, délivré par l'unité de calcul des courant de référence 25, comporte les étapes suivantes :

- traitement des mesures (basé sur l'algorithme d'identification des puissances instantanées ou autres 25-A) du courant $I_L$ de la charge 2 et de la tension au point de raccordement $V_s$ de manière à estimer les courants non actifs harmoniques, réactif et déséquilibré ;

- génération d'une consigne $I_{ref}$ calculée pour annuler (en partie ou en totalité suivant le dimensionnement de l'unité 7) le contenu non actif du courant $I_s$ du côté réseau d'alimentation 1.

Optionnellement mais avantageusement, l'unité de calcul des courants de référence 25 est configurée pour identifier, via l'unité 25-B, le point de puissance maximale MPPT de fonctionnement de l'unité de puissance à génération d'énergie renouvelable 100, installée au sein d'un champ de production d'énergie renouvelable, d'un bâtiment ou d'une usine d'autoconsommation 99, de la façon suivante :

- traitement des mesures du courant $I_{pv}$ et la tension $V_{pv}$ (basé, via l'unité 25-B, sur un algorithme de type P&O de l'anglais « *Perturb and Observe* » ou autres, qui fait partie de l'unité 25) de l'unité de puissance à génération d'énergie renouvelable 100.

- génération de la tension maximale $V_{MPP}$, via l'unité 25-B, et par conséquent la puissance maximale $P_{MPP}$ et le courant maximal $I_{MPP}$ qui sera intégré dans le courant de consigne $I_{ref}$.

L'unité de contrôle-Commande 12 est configurée en outre pour effectuer la régulation de la tension $V_{dc}$ aux bornes de l'élément de stockage capacitif 3, et assurer, par conséquent, la recharge du condensateur 3. En effet, le condensateur 3 a, entre autres, pour rôle de compenser les pertes des unités 9 et 10 ainsi que de fournir le courant actif maximal $I_{MPP}$ de l'unité de puissance à génération d'énergie renouvelable 100 aux points de raccordement C, via l'onduleur 9 et l'unité de filtrage 10.

La suite du processus au sein de l'unité 12 :

- traitement des mesures de la tension $V_{dc}$ aux bornes de l'élément de stockage capacitif 3 ;

- filtrage, via un filtre passe-bas du deuxième ordre 61, du signal mesuré de la tension $V_{dc}$ des fluctuations à 300 Hz ou autres ;

- poursuite, via le contrôleur 62, entre $D_{dc-ref}=V_{MPP}$ et la tension $V_{dc}$, afin d'assurer une tension maximale $V_{MPP}$ constante aux bornes de l'élément de stockage capacitif 3 ;

- génération du courant perturbateur injecté en opposition de phase par rapport à celui circulant dans la charge et du courant de la puissance maximale de l'unité 100.

Pour cette poursuite via le contrôleur 62, l'unité de calcul des courants de référence 25 est configurée pour intégrer le calcul du courant de la puissance maximale, via l'unité 25-B, dans l'algorithme du calcul des courants non actifs, assuré par l'unité 25-A.

Le processus de cette intégration est fait de la façon suivante :
la sortie du contrôleur 62 étant la puissance maximale $P_{MPP}$ de l'unité 100, ce signal est rajouté au sommateur 63, qui a à sa deuxième entrée la puissance perturbatrice active $\tilde{P}$ issue de l'unité 25-A (Amont) du calcul des puissances instantanées perturbatrices (active $\tilde{P}$, réactive $\tilde{Q}$ et homopolaire $P_0$). L'unité 25-A (Amont) assure le calcul, à partir des tensions $V_s$ aux points de raccordement C et des courants $I_L$ de la charge 2, des puissances instantanées perturbatrices (active $\tilde{P}$, réactive $\tilde{Q}$ et homopolaire $P_0$ dans le repère $\alpha$, $\beta$ et 0) causées par les courants perturbateurs non actifs présents dans le courant de la charge 2 $I_L$.

Le calcul des courants de la consigne/référence $I_{ref}$ se fait via un passage inverse, par rapport à l'unité 25-A (Amont), à travers l'unité 25-A (Aval). Ce courant de référence contient les courants non actifs ainsi que le courant de la puissance maximale, d'abord calculé dans le même repère $\alpha$, $\beta$ et 0 puis dans le repère triphasé.

Les unités 25-A(Amont) et 25-A(Aval) sont configurées pour identifier les courants perturbateurs ; les unités 25-A(Amont), 25-A(Aval) et 25-B représentent l'unité de calcul des courants de référence 25.

Ensuite, l'unité 12 ayant le courant de consigne $I_{ref}$, issu de l'unité 25, ainsi que celui injecté $I_{inj}$ contrôlé à son tour via le contrôleur 23, l'onduleur 9 est commandé via l'unité de pilotage 21 pour générer le courant $I_{inj}$.

Cela permet d'éviter l'utilisation d'un dispositif supplémentaire, un autre onduleur, pour générer la puissance maximale issue de l'unité de puissance à génération d'énergie renouvelable 100.

Optionnellement, l'unité de contrôle-commande 12 peut comporter un hacheur configuré pour maintenir une tension continue prédéterminée aux bornes de l'élément de stockage d'énergie 3 de l'onduleur. Cette tension peut correspondre à la tension d'un parc de batteries à charger.

Dans un mode de réalisation, le dispositif de compensation 7 est installé au sein d'un bâtiment 27 dit intelligent, c'est-à-dire que les appareils électriques que contient le bâtiment intelligent 27 peuvent être commandés et activés sélectivement par une unité de contrôle décentralisé 70, par exemple pour fonctionner lors des périodes dites creuses de la journée, pendant lesquelles la demande énergétique du réseau est faible et le coût de l'énergie, du point de vue du consommateur, diminue.

L'unité de contrôle-commande 12 est connectée à l'unité de contrôle décentralisé 70 du bâtiment intelligent 27. L'unité de contrôle décentralisé 70 communique en temps réel à l'unité contrôle-commande 12 les puissances des charges (appareils électriques) en état de marche ou non du bâtiment 27.

L'unité de contrôle-commande 12, ayant en temps réel la puissance maximale de l'unité de puissance à génération d'énergie renouvelable 100 délivrée par l'unité 25-B ainsi que les puissances des charges en état de marche ou non du bâtiment 27 communiquées par l'unité de contrôle décentralisé 70, est configurée pour réguler la consommation des différents appareils selon au moins deux modes de répartition économique des charges.

Dans un premier mode où l'énergie primaire renouvelable est peu disponible, l'unité de contrôle-commande 12 est configurée pour piloter l'unité de contrôle décentralisé 70 de manière à activer sélectivement les appareils du bâtiment intelligent 27, de manière à présenter une courbe de charge plate ; ce mode de consommation est appelé mode modulé.

Cela permet d'éviter des pics de demande sur le réseau 1 et de bénéficier d'un coût réduit de l'énergie consommée.

Dans un deuxième mode de répartition économique des charges, le bâtiment intelligent 27 comportant une unité de puissance à génération d'énergie renouvelable 100 et en cas d'une forte disponibilité des sources primaires renouvelables, l'unité de contrôle commande 12 est configurée pour piloter l'unité de contrôle décentralisé 70 de manière à activer sélectivement les appareils du bâtiment intelligent 27 en fonction de la production de l'unité 100 ; ce mode de consommation est appelé mode adapté.

La majeure partie voire l'intégralité de l'énergie consommée est, dans ce cas, d'origine renouvelable, ce qui permet de minimiser la consommation d'énergie provenant du réseau 1.

Dans un exemple, le dispositif de compensation 7 est installé entre le réseau 1 et un site industriel ou un bâtiment résidentiel, administratif ou commercial, assimilable du point de vue du réseau 1 à une charge perturbatrice non linéaire/linéaire 2.

Avant l'installation d'un tel dispositif sur un site industriel existant, il est parfois nécessaire de démontrer les qualités du dispositif au propriétaire du site, qui prendra la décision d'équiper ou non son site avec le dispositif.

Il est donc nécessaire de modéliser le site afin de simuler ses performances avec et sans le dispositif, afin d'apprécier l'apport du dispositif de compensation.

Classiquement, la modélisation de sites industriels est réalisée en produisant un modèle complet contenant toutes les machines ainsi que leurs commandes présentes sur la zone étudiée.

Ce type de modélisation est confronté à deux problèmes : matériel et informatique, qui limitent son adoption comme modèle crédible permettant de valider des solutions appliquées à ce type de réseaux électriques.

En effet, il faut dans ce cas autant d'appareils de mesure que de machines commandées. De plus, il s'avère difficile d'effectuer une simulation d'un réseau industriel à plusieurs niveaux de tension, contenant plusieurs transformateurs de puissance, de nombreuses lignes et câbles électriques, ainsi qu'une pluralité de machines commandées avec plusieurs filtres de dépollution.

Dans un exemple, un seul dispositif de mesure est installé à l'entrée de chaque ligne de production.

La modélisation du site est réalisée en remplaçant les machines commandées par leurs courants (actif, réactif et harmoniques) mesurés par un des dispositifs de mesure triphasés.

Le modèle de simulation en est fortement allégé car des sources de courant, dont le nombre est limité par un rang harmonique maximal fixé théoriquement à 50, remplacent le modèle des machines commandées.

Il est à noter qu'une source de courant est toujours associée à une résistance très élevée (de l'ordre du MΩ) connectée en parallèle avec la source de courant.

Le modèle est ensuite validé en comparant les résultats de la simulation avec des mesures effectuées à l'entrée des lignes de production.

Le modèle est enfin utilisé pour simuler, avec crédibilité, l'effet du dispositif de compensation 7 sur le signal transitant dans les charges du site industriel et sur le courant perturbateur circulant dans le réseau 1.

Dans un exemple, le système comporte une pluralité d'unités de puissance à génération d'énergie renouvelable 100, par exemple de type éolien ou photovoltaïque, chacune connectée, directement ou via un dispositif 7, à un réseau local 28, lui-même connecté au réseau 1.

Le réseau local 28 correspond aux acteurs producteurs, consommateurs et conso-producteurs (des bâtis à autoconsommation ou à énergie positive).

Dans la plupart du temps, chaque unité de production 100 est connectée au réseau local 28 au moyen d'un dispositif de compensation 7 configuré pour maximiser la production de puissance de l'unité de production 100 et dépolluer le courant (et par conséquent la tension) circulant du côté du réseau local 28 et du réseau électrique 1.

Chaque dispositif de compensation 7 est connecté, informatiquement, à un système de gestion semi-décentralisé 29, auquel il communique, en temps réel, des informations concernant la consommation ainsi que la production d'énergie des unités de production 100 réelle et prévisionnelle.

En outre, le système de gestion semi-décentralisé 29 reçoit des informations en temps réel sur le productible d'énergie des unités de production d'énergie conventionnelle (fossile) 80, installées au sein du réseau local 28.

Le système de gestion semi-décentralisé 29 gère la répartition économique des générateurs à énergies conventionnelles (fossiles) au sein du réseau local 28, en fonction de la production totale d'origine renouvelable ainsi que la consommation totale au sein du même réseau local 28.

Le système de gestion semi-décentralisé 29 reçoit en temps réel les informations sur les puissances d'origine renouvelable et conventionnelle disponible à tout moment sur le réseau local 28.

Le système comporte également une pluralité de postes de consommation, par exemple un bâtiment intelligent ou un site industriel intelligent, chaque poste de consommation étant assimilable du point de vue du réseau à une charge 2 non linéaire/linéaire, chacun des postes de consommation étant connecté au réseau local 28, est équipé d'un dispositif de compensation 7 configuré pour dépolluer le courant circulant du côté réseau local 28 des perturbations causées par la charge 2 et pour piloter l'activation des différents appareils du poste de consommation via l'unité de contrôle décentralisé 70.

Chaque dispositif de compensation 7 est connecté au système de gestion semi-décentralisé 29, auquel il communique des informations concernant la consommation instantanée et la consommation à venir en fonction du fonctionnement programmé des postes de consommation, de manière à estimer la demande en énergie.

Le système de gestion semi-décentralisé 29 recevant à tout moment l'ensemble des données (réelles et prévisionnelles) de l'énergie productible ainsi que celles à consommer par les différents acteurs du réseau local (producteur, consommateurs, conso-producteurs), il peut intervenir, uniquement en cas de besoin quand la demande totale d'énergie au sein du réseau local 28 est largement supérieure à la production totale, auprès des pilotes des unités de contrôle décentralisée des bâtiments intelligents 27 pour faire basculer le mode de consommation en mode modulé (courbe de charge plate) au profit du système global.

Il est entendu par poste/acteur conso-producteur un bâtiment à autoconsommation ou à énergie positive. Le système de gestion semi-décentralisé 29 est donc configuré pour estimer, sur une période donnée, la demande totale en énergie du réseau local 28 qu'il supervise.

En fonction des estimations de production de puissance et de demande en énergie, le système de gestion semi-décentralisé 29 est configuré pour :

- effectuer, en temps réel, la répartition économique de production aux unités de production d'énergie conventionnelle 80,

- intervenir, uniquement en cas de besoin quand la demande totale d'énergie au sein du réseau local 28 est largement supérieure à la production totale, auprès des unités de contrôle décentralisé 70, via les unités contrôle-commande 12 des dispositifs 7, pour faire basculer le mode de consommation en mode modulé (courbe de charge plate).

- piloter, en dernier recours et en cas de risque de déficit de production, le disjoncteur 90 pour permettre une consommation énergétique de la part du réseau 1. Ce mode de fonctionnement n'est pas possible quand le réseau local est îloté, c'est-à-dire non relié au réseau 1.

Le système de gestion 29 est donc habilité à prioriser le fonctionnement de certains postes de consommation par rapport à d'autres, afin de répartir la demande en énergie sur la période donnée.

De plus, le système de gestion semi-décentralisé 29 peut répartir dans le temps la demande en puissance de manière à ce que, lorsqu'une puissance provenant du réseau 1 est nécessaire, elle est consommée lors de périodes de faible demande de manière à minimiser les coûts et éviter de charger le réseau 1 lors de pics de demande.

Il est à noter que la maximisation de la puissance des unités de production d'énergie renouvelable 100 ainsi que l'optimisation de la consommation sont assurées par les dispositifs 7 via les unités de contrôle-commande 12. Le système de gestion semi-décentralisé 29 est appelé ainsi car il n'est sollicité que pour assurer la répartition économique de production des unités de production d'énergie conventionnelle 80 et pour redresser la consommation en cas de besoin.

Suite à une étude concernant l'invention menée par les inventeurs, les inventeurs souhaitent formuler les commentaires suivants.

Comparaison Invention/Art antérieur

**1. Structure générale du filtre actif parallèle de l'art antérieur**

Topologie générale

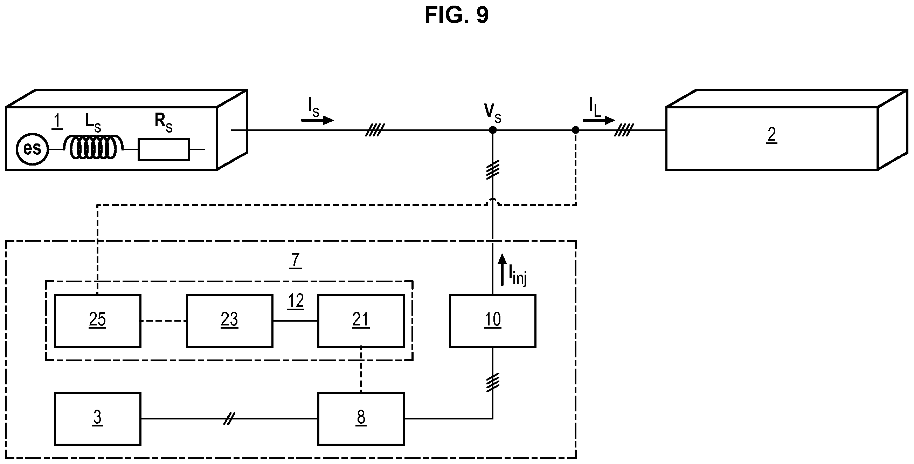

La Fig. 9 présente la structure générale du filtre actif parallèle, laquelle se présente sous la forme de deux blocs : le circuit de puissance et le circuit de contrôle-commande. Le circuit de puissance est constitué :

- d'un onduleur de tension à base d'interrupteurs de puissance, commandables à l'amorçage et au blocage (GTO, IGBT, ...etc.), avec des diodes en antiparallèle,

- d'un circuit capacitif de stockage d'énergie,

- d'un filtre de sortie.

Le circuit de contrôle-commande quant à lui, est constitué :

- de la méthode d'identification des courants perturbés,

- du système à base de PLL (boucle à verrouillage de phase ou en anglais « *Phase Locked Loop* » en anglais) qui est intégré dans la méthode d'identification des courants perturbateurs,

- de la régulation de la tension continue appliquée aux éléments de stockage d'énergie,

- du control du courant injecté sur le réseau à partir de l'onduleur de tension,

- de la commande de l'onduleur de tension.

Filtre de sortie

Le filtre de sortie est un filtre passif utilisé pour connecter l'onduleur de tension au réseau électrique. Le filtre de sortie est dimensionné pour satisfaire les deux critères suivants :

- assurer la dynamique du courant

$$\frac{d}{dt}\vec{I}_{h-L} = \frac{d}{dt}\vec{I}_{inj}$$

avec $I_{h\_L}$ le courant harmonique contenu dans le courant de la charge $I_L$ et $I_{inj}$ le courant du filtre actif injecté au réseau,

- empêcher les composantes dues aux commutations de se propager sur le réseau électrique.

Deux types du filtre de sortie peuvent être employés : un filtre de sortie du premier ordre et un filtre de sortie du troisième ordre.

Filtre du premier ordre

Ce type de filtre est le plus utilisé dans la littérature ; il est composé d'une simple inductance $L_f$ de résistance interne pratiquement négligeable.
Un filtre de ce type ne permet pas de satisfaire simultanément les deux critères de dimensionnement du filtre de sortie. En effet, seule une valeur relativement faible de Lf peut réaliser une bonne dynamique du filtre actif en satisfaisant l'égalité ci-dessus.
Malheureusement, une valeur faible de Lf permet à la majorité des composantes dues aux commutations de se retrouver du côté réseau et par conséquent d'affecter les installations et les équipements électriques.
Inversement, une valeur relativement élevée de Lf va empêcher ces composantes de se propager sur le réseau électrique, mais affectera la dynamique du filtre actif et dégradera alors la qualité de compensation.
Le bon dimensionnement du filtre de sortie du premier ordre dépendra donc du compromis à trouver entre la dynamique et l'efficacité du filtre actif parallèle.
Ce compromis est très difficile à fixer sans l'emploi d'un filtre passif auxiliaire installé à la sortie de l'onduleur ou en amont du côté réseau.
Cependant, ce filtre auxiliaire peut causer des effets secondaires non désirés comme la résonance avec d'autres éléments passifs installés sur le réseau électrique.
Il occasionne également une consommation de puissance active par sa résistance d'amortissement.
De plus, la qualité de filtrage de ces filtres auxiliaires se dégrade avec le temps à cause du vieillissement de leurs éléments passifs.

Filtre du troisième ordre (LCL) : modélisation dans le plan s

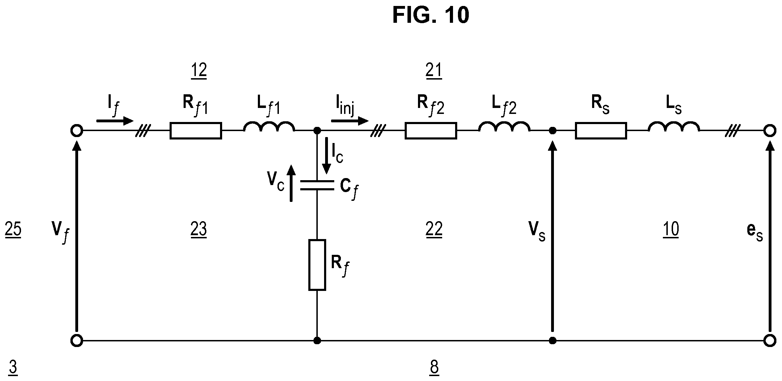

Le filtre de sortie du troisième ordre est une alternative à un filtre du premier ordre lourd, volumineux, cher et difficile à concevoir, permettant d'échapper aux problèmes évoqués dans le cas du filtre de sortie du premier ordre.
Ce filtre de sortie, se compose de deux inductances ($L_{f1}$, $L_{f2}$) de résistances internes respectives ($R_{f1}$, $R_{f2}$) et d'une capacité Cf avec une petite résistance d'amortissement $R_f$ (voir la Fig. 10) que nous négligerons par la suite.
Il est à noter que ($L_s$, $R_s$ et $e_s$) représentent respectivement l'inductance, la résistance ainsi que la force électromotrice du réseau électrique en amont.
Ce type de filtre et grâce au degré de liberté supplémentaire, fourni par la capacité Cf, peut assurer les deux critères du dimensionnement du filtre de sortie que nous avons évoqués précédemment.
Les équations qui modélisent le filtre de sortie sont :

$$I_{inj} = \frac{B_1(s)}{A(s)}\,V_f(s) + \frac{B_2(s)}{A(s)}\,V_s(s) \qquad\qquad \text{(Maths. 1)}$$

avec $V_f$ la tension de sortie de l'onduleur, $B_1(s)/A(s)$ la fonction de transfert du filtre de sortie avec le réseau correspondant au système d'origine (à Controller) et $B_2(s)/A(s)$ la fonction de transfert correspondant au modèle de perturbation.
Ces perturbations sont causées par la tension du réseau électrique e(s) que l'on considère désormais égale à la tension de raccordement Vs pour les réseaux électriques de forte puissance de court-circuit.

$$\begin{cases} A(s) = a_1 s^3 + a_2 s^2 + a_3 s \\ B_1(s) = b_{11} s^3 + b_{12} \\ B_2(s) = -(b_{21} s^3 + b_{12} s^2 + b_{23}) \end{cases}$$

avec

$$a_1 = \left( L_s + L_{f2} \right) L_{f1}\, C_f$$

$$a_2 = \begin{bmatrix} \left( L_s + L_{f2} \right) R_{f1}\, C_f + \left( R_s + R_{f2} \right) L_{f1}\, C_f \\ + \left( R_{f1} + R_s + R_{f2} \right) R_f\, C_f \end{bmatrix}$$

$$a_3 = \begin{bmatrix} \left( L_s + L_{f2} \right) + L_{f1} + \left( R_s + R_{f2} \right) R_{f1}\, C_f \\ + \left( R_{f1} + R_s + R_{f2} \right) R_f\, C_f \end{bmatrix}$$

$$a_4 = R_{f1} + R_s + R_{f2}$$

$$b_{11} = R_f\, C_f$$

$$b_{12} = 1$$

$$b_{21} = L_{f1}\, C_f$$

$$b_{22} = \left( R_f + R_{f1} \right) C_f$$

$$b_{23} = 1$$

Des relations précédentes, si nous négligeons toutes les résistances (sauf Rf), nous pouvons établir la relation suivante, valable aux fréquences supérieures à 50 Hz :

$$\frac{B_1(s)}{A(s)} = \frac{\left( R_f\, C_f \right)s + 1}{\left( L_{f1}\, L_{f2}\, C_f \right)s^3 + R_f\, C_f \left( L_{f1} + L_{f2} \right)s^2 + \left( L_{f1} + L_{f2} \right)s}$$

La fréquence de résonance *fcp* du filtre LCL, si nous négligeons dans ce cas la résistance $R_f$ aussi, est donnée par la relation :

$$f_{cp} = \frac{1}{2\pi \sqrt{\left( \dfrac{L_{f1}\, L_{f2}\, C_f}{L_{f1} + L_{f2}} \right)}}$$

Le filtre de sortie LCL est dimensionné pour rejeter les composantes dues à la fréquence de commutation de l'onduleur, laquelle a été fixée à 16 kHz, pour correspondre à un cas d'application industriel que nous proposons.
Ainsi, un rejet de plus que -50 dB est obtenu pour une fréquence de coupure de 1900 Hz.

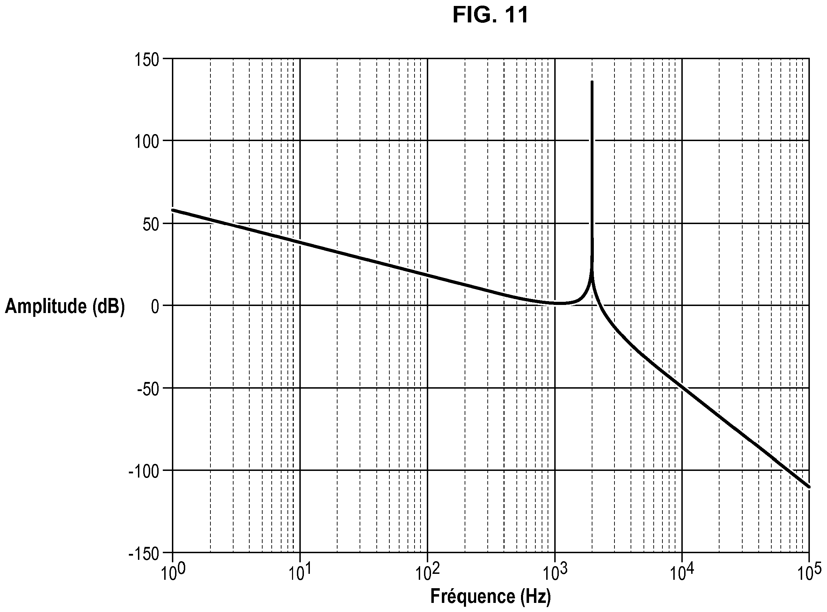

Ce choix nous a permis de bien atténuer les composantes à hautes fréquences, comme le montre le diagramme du gain du filtre de sortie en fonction de la fréquence de la Fig. 11.

Filtre du troisième ordre (LCL) : modélisation dans l'espace d'état

En se basant sur la représentation de Laplace (Maths. 1), la représentation du filtre LCL dans l'espace d'état peut être donnée par les équations suivantes :

$$\frac{dv_c}{dt} = \frac{i_f - i_{inj}}{C_f}$$

$$\frac{di_f}{dt} = \frac{1}{L_{f1}}\left(v_f - v_c - R_f(i_f - i_{inj}) - R_{f1}i_f\right) \qquad \text{(Maths. 2)}$$

$$\frac{di_{inj}}{dt} = \frac{1}{L_{f2}}\left(v_c - R_f(i_f - i_{inj}) - v_s - R_{f2}i_{inj}\right)$$

La représentation vectorielle-matricielle est donnée par :

$$\dot{x} = A\,x + B\,v_f + P\,v_s \qquad \text{(Maths. 3)}$$

avec

$$A = \begin{bmatrix} -\frac{R_{f1}+R_f}{L_{f1}} & \frac{R_f}{L_{f1}} & -\frac{1}{L_{f1}} \\ \frac{R_f}{L_{f2}} & -\frac{R_{f2}+R_f}{L_{f2}} & \frac{1}{L_{f2}} \\ \frac{1}{C_f} & -\frac{1}{C_f} & 0 \end{bmatrix},\ B = \begin{bmatrix} \frac{1}{L_{f1}} \\ 0 \\ 0 \end{bmatrix},\ P = \begin{bmatrix} 0 \\ -\frac{1}{L_{f2}} \\ 0 \end{bmatrix}\ x = \begin{bmatrix} i_f \\ i_{inj} \\ v_c \end{bmatrix}$$

## 2. COMMANDE LINEAIRE PAR RST DE L'ONDULEUR DE TENSION DE L'ETAT DE L'ART CONNECTE AU RESEAU VIA LE FILTRE LCL

Contrôleur RST

La stratégie de contrôle est basée sur l'estimation des perturbations de courant au moyen d'un algorithme d'identification. Ensuite, l'onduleur de tension, commandé par la commande MLI (Modulation de Largeur d'imputation, ou en anglais « PWM : *Pulse width modulation* »), génère les courants injectés au réseau $I_{inj}$, qui doivent poursuivre les courants de références identifiés $I_{ref}$ ($I_{inj} \rightarrow I_{ref}$). La boucle de contrôle est conçue pour assurer une poursuite de haute précision.

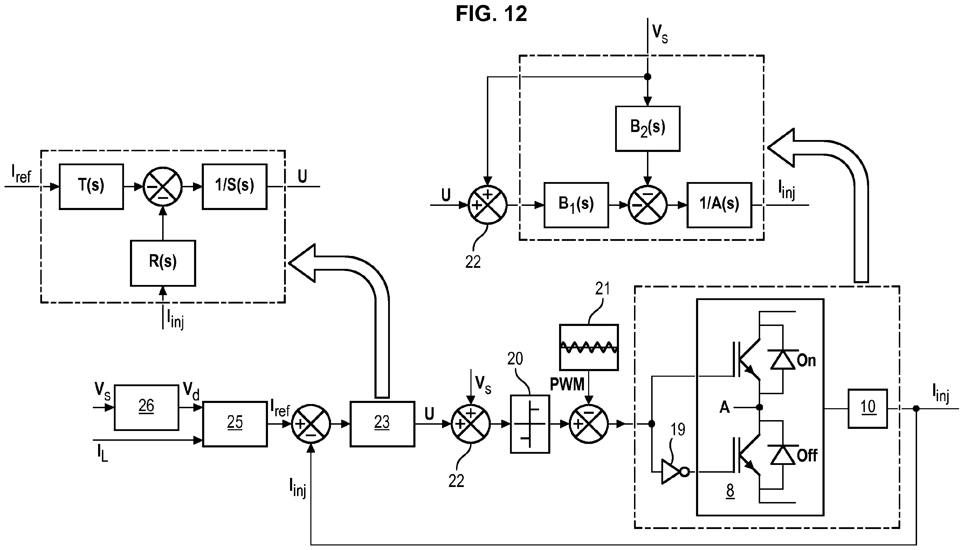

Le diagramme général du système de commande du courant est représenté sur la Fig. 12. Dans ce diagramme, l'onduleur de tension (commandé par la PWM) est connecté au réseau électrique via un filtre LCL, avec un contrôleur du type RST, et la méthode des puissances instantanées pour l'identification des perturbations du courant. Une boucle à verrouillage de phase (PLL) est utilisée pour extraire la composante positive de la tension du réseau ($V_d$), afin de réaliser les bonnes performances attendues de l'algorithme d'identification employé.

La tension du réseau Vs représente ici une perturbation externe, dont les effets sont compensés en ajoutant la même tension de réseau au signal de commande (u). Cela empêchera le courant fondamental de passer du réseau au filtre actif.

De l'équation (1) et en employant un contrôleur RST, nous obtenons :

$$I_{inj}(s) = \frac{(T\,B_1)(s)}{(S\,A + R\,B_1)(s)}\,I_{ref}(s) + \frac{(S\,B_2)(s)}{(S\,A + R\,B_1)(s)}\,V_s(s)$$

Avec *R*(*s*), *T*(*s*) et *S*(*s*) sont les polynômes du contrôleur.

L'ordre de $R(s)$ et $S(s)$ est le même que l'ordre du système $LCL\left(\frac{B_1(s)}{A(s)}\right)$ ; donc les polynômes R(s) et $S(s)$ sont du troisième ordre. Le polynôme $T(s)$ est choisi de telle sorte que $\frac{I_{ref}(s)}{I_{inj}(s)} = 1$ pour toute la bande de fréquence inclue dans le signal de référence $I_{ref}$ ; $T(s)$ peut-être un gain simple dans ce cas. Il est à noter que $\frac{R(s)}{S(s)}$ représente la fonction de transfert du contrôleur RST ; le dénominateur commun $D(s) = (S A + R B_1)(s)$, nommé polynôme de stabilité arbitraire, contient les pôles de la boucle fermée. Ces pôles sont placés dans un secteur du $(2 \times 45°)$, pour assurer un amortissement du 0.7. Enfin, les pôles de la boucle de contrôle sont placés afin d'assurer une réponse rapide et précise, avec un bon rejet des perturbations. Il est à noter que les valeurs des pôles sont limitées par la fréquence de coupure en boucle fermée.

**Effet du déphasage**

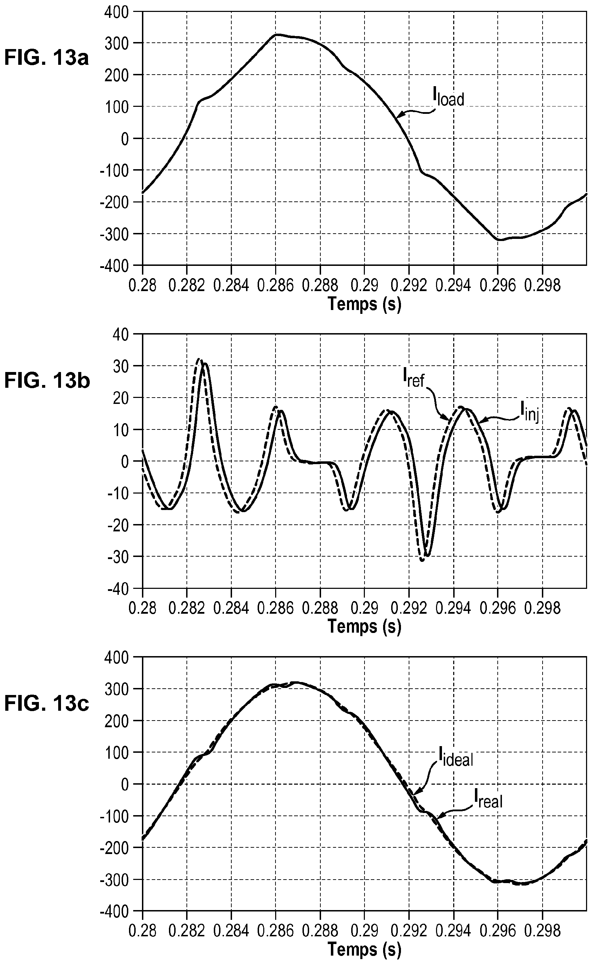

Le contrôleur RST (ainsi que tous les contrôleurs linéaires) peuvent être utilisé quand les référence à poursuivre sont constituées de signaux constants ou à une fréquence seule et relativement faible (cas de la compensation du réactif ou du déséquilibre à la fréquence fondamentale 50 Hz). A cette fréquence, le déphasage entre les références identifiées ($I_{ref}$) et la sortie de la boucle fermée injectées ($I_{inj}$) est acceptable. Par contre, si la référence à suivre est composée de signaux à plusieurs fréquences, le déphasage n'est plus négligeable. En effet, le déphasage augmente avec la fréquence. L'effet du déphasage de la structure montrée en Fig. 12 est présenté sur la Fig. 13. De cette figure, nous pouvons observer que le courant perturbé ($I_{Load}$) n'est pas bien compensé pour ($I_{real}$: compensation avec déphasage), par rapport à la forme idéale ($I_{ideal}$: compensation sans déphasage).

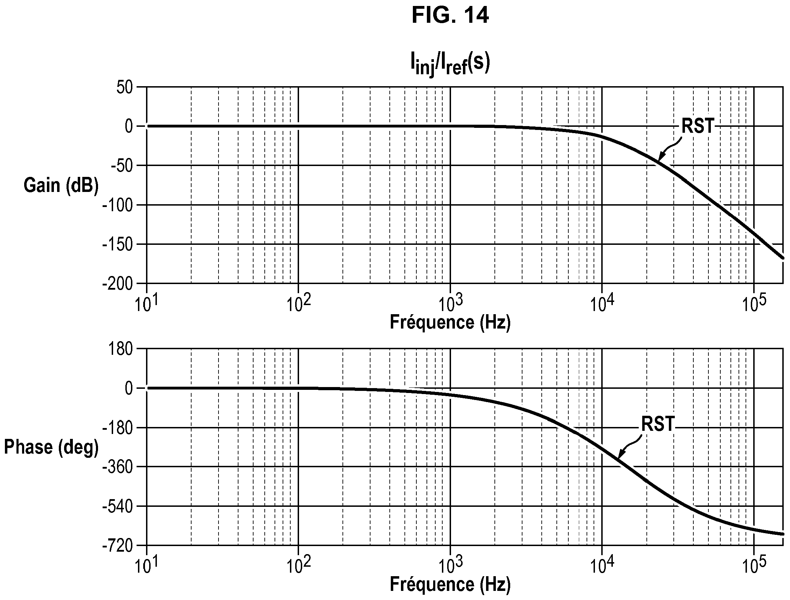

La fonction de transfert de la boucle de contrôle avec le RST $I_{inj}(s)/I_{ref}(s)$ est présentée via la Fig. 14.

Le gain et la phase de la fonction de transfert en boucle fermée $I_{inj}(s)/I_{ref}(s)$ sont donnés via le Tableau I, pour des multiples de la fréquence fondamentale allant de 50 $Hz$ jusqu'à (23x50) $Hz$.

## Tableau. I. Gain et la phase de la fonction de transfert en boucle fermée avec RST

| F (Hz) | | 50 | 250 | 350 | 550 | 650 | 850 | 950 | 1150 |
|---|---|---|---|---|---|---|---|---|---|
| RST | G | 1 | 1 | 1 | 1 | 0.99 | 0.98 | 0.98 | 0.97 |
| | PH° | -1 | -8 | -11 | -18 | -21 | -27 | -30 | -37 |

Il est à noter que le contrôleur linéaire de RST assure un gain unitaire (0 $dB$) pour pratiquement toute la bande de fréquence. De plus, le RST est utilisé seulement pour compenser les courants déséquilibrés et/ou réactifs à la fréquence fondamentale.

En effet, à cette fréquence, un déphasage du (-1°) est négligeable. Après cette fréquence, le déphasage n'est plus négligeable, et le filtre actif parallèle ne peut pas compenser les courants harmoniques.

## 3. CONTROLE NON LINEAIRE (PAR MODE GLISSANT) DE L'ONDULEUR DE TENSION SELON L'INVENTION CONNECTE AU RESEAU VIA LE FILTRE LCL

Dans la plupart des cas, les lois de commande, conçues pour contrôler les onduleurs de tension qui sont connectés au réseau électrique via un filtre LCL, ont été à l'origine établies pour les systèmes d'énergie renouvelable (photovoltaïque et éolien). Dans ce cas, les contrôleurs linéaires peuvent être proposés car l'onduleur a uniquement des composantes fondamentales (une puissance active) à injecter au réseau : le déphasage étant négligeable dans ce cas.

Cependant, dans le cas d'un filtre actif parallèle, l'onduleur doit injecter au réseau électrique à la fois des composantes fondamentales (réactive et déséquilibrée) et harmoniques, ce qui implique un maitrise total d'une très large bande passante de fréquence. Il est à noter qu'un déphasage important limite l'applicabilité des contrôleurs linéaires dans le cas d'un filtrage harmonique.

L'alternatif pour surmonter ce problème de déphasage, rencontré lors de l'emploi d'un filtre LCL associé à un contrôleur linéaire, est la commande non linéaire. Dans cette invention, nous employons la méthode de contrôle par mode glissant (SMC pour « *Slinding Mode Control* » en anglais) pour assurer une réponse dynamique souhaitée, une forte robustesse /insensibilité aux perturbations bornées ainsi que des bonnes propriétés de contrôle dans une large gamme de conditions de fonctionnement.

Par contre, il est bien connu qu'un contrôleur SMC idéal génère une commande, des interrupteurs de l'onduleur, à très haute fréquence, afin d'assurer une convergence en temps fini vers la surface de glissement où les états du système sont maintenus pendant tout le temps qui suit, même en présence de perturbations bornées.

En pratique, l'onduleur de tension est commandé par une fonction de commutation à fréquence limitée/ fixe. Ainsi, des commutations variables à très hautes fréquences, si elle se produit, pourrait entraîner une surchauffe qui peut aller jusqu'à la destruction de l'onduleur.

Par conséquent, nous employons un SMC classique (avec fonction *sign*) à commande continue. En effet, afin d'éviter une commande discontinue (des commutations variables de l'onduleur à très hautes fréquences), causées par un SMC classique, nous optons pour deux contrôleurs par mode glissant, l'un est associé à une fonction *sign* approximée en fonction *sigmoïde* et l'autre est avec une méthode que nous appelons AIRD (une augmentation artificielle du degré relatif, suivie par un intégrateur, en anglais : « *an Artificial Increase Relative Degree, followed by an integrator* »). Enfin, la commande du filtre actif générée par les SMCs continus sera modulée par une MLI, afin de permettre au filtre actif de fonctionner à une fréquence de commutation fixe, ce qui facilite, entre autres, le blocage des composantes à hautes fréquences par le filtre LCL.

Conception d'un contrôleur classique par mode glissant

Considérons le system (3) avec: $y := i_{inj}$ représentant l'entrée, $u := v_f$ est le signal de commande et $w := v_s$ comme perturbations, et pour $R_f = 0$, l'équation (3) devient :

$$\dot{x} = Ax + Bu + Pw, \quad y = Cx, C = [0\ 1\ 0] \qquad \text{(Maths. 4)}$$

avec

$$A = \begin{bmatrix} -\frac{R_{f1}}{L_{f1}} & 0 & -\frac{1}{L_{f1}} \\ 0 & -\frac{R_{f2}}{L_{f2}} & \frac{1}{L_{f2}} \\ \frac{1}{C_f} & -\frac{1}{C_f} & 0 \end{bmatrix}, B = \begin{bmatrix} \frac{1}{L_{f1}} \\ 0 \\ 0 \end{bmatrix}, P = \begin{bmatrix} 0 \\ -\frac{1}{L_{f2}} \\ 0 \end{bmatrix}$$

Il est clair que le degré relatif du système (4) est r = 3, car $CB = CAB = 0$ et $CA^2B = \frac{1}{(L_{f1}L_{f2}C_f)}$, alors une variable de glissement est choisie sous la forme :

$$\mathbb{S} = K_0\, e + K_1\, \dot{e} + K_2\, \ddot{e} \qquad \text{(Maths. 5)}$$

avec $e = i_{inj} - i_{ref}$. Il est à noter que $\dot{e}, \ddot{e}$ sont obtenues en utilisant un différentiateur en mode glissant d'ordre supérieur.

Les coefficients positifs $K_0$, $K_1$ et $K_2$ de l'équation 5 sont sélectionnés pour rendre le système (Maths. 4) exponentiellement stable avec le taux de convergence souhaité, dans le mode glissant défini par $\mathbb{S} = 0$.

Afin de concevoir un contrôleur SMC qui dérive $\mathbb{S} \to 0$ en temps fini et qui garde les états du système (Maths. 4) dans une surface de glissement $\mathbb{S} = 0$ pour tout le temps qui suit, les dynamiques de la variable de glissement sont dérivées :

$$\dot{\mathbb{S}} = F\left(\frac{di_{ref}}{dt}, \frac{d^2 i_{ref}}{dt^2}, v_s, \frac{dv_s}{dt}, \frac{d^2 v_s}{dt^2}, i_{inj}, i_f, v_c\right) + \left(\frac{K_2}{L_{f1} L_{f2} C_f}\right) u \qquad \text{(Maths. 6)}$$

avec

$$F\left(\frac{di_{ref}}{dt}, \frac{d^2 i_{ref}}{dt^2}, v_s, \frac{dv_s}{dt}, \frac{d^2 v_s}{dt^2}, i_{inj}, i_f, v_c\right) = K_0 \dot{e} + K_1 \ddot{e}$$

$$-K_2 \left\{ \frac{d^3 i_{ref}}{dt^3} + K_2 \left( -\left[ \left(\frac{R_{f2}}{L_{f2}}\right)^2 - \frac{1}{L_{f2} C_f} \right] \left(\frac{R_{f2}}{L_{f2}}\right) + \frac{R_{f2}}{L_{f2}^2 C_f} \right) i_{inj} - \left( \frac{R_{f2}}{L_{f2}^2 C_f} + \frac{R_{f1}}{L_{f1} L_{f2} C_f} \right) i_f \right.$$

$$\left. + \left( \left[ \left(\frac{R_{f2}}{L_{f2}}\right)^2 \frac{1}{L_{f2}} - \frac{1}{L_{f2}^2 C_f} \right] - \frac{1}{L_{f1} L_{f2} C_f} \right) v_c - \left( \left[ \left(\frac{R_{f2}}{L_{f2}}\right)^2 - \frac{1}{L_{f2} C_f} \right] \frac{1}{L_{f2}} \right) v_s + \left(\frac{R_{f2}}{L_{f2}}\right) \frac{dv_s}{dt} - \left(\frac{1}{L_{f2}}\right) \frac{d^2 v_s}{dt^2} \right\}$$

$$(7)$$

Il est supposé que :

-   la perturbation $V_s$ avec ses deux premières dérivées $\frac{dv_s}{dt}, \frac{d^2 v_s}{dt^2}$ ainsi que $\frac{d^3 i_{ref}}{dt^3}$ sont bornées,
-   les deux premières dérivées de l'erreur de poursuite $\dot{e}, \ddot{e}$ ainsi que les variables $i_{inj}$, $i_f$, $v_c$ sont bornées dans un domaine d'état raisonnable, qui inclut le point de fonctionnement.

Alors, il existe $\eta > 0$ tel que

$$\left| F\left(\frac{di_{ref}}{dt}, \frac{d^2 i_{ref}}{dt^2}, \frac{d^3 i_{ref}}{dt^3}, v_s, \frac{dv_s}{dt}, \frac{d^2 v_s}{dt^2}, i_f, i_{inj}, v_c\right) \right| \leq \eta,$$

La condition d'existence d'un mode glissant $\mathbb{S} \cdot \dot{\mathbb{S}} < 0$ peut être facilement réalisé par le SMC

$$u := v_f = -\lambda \, sign\left(\mathbb{S}\right) \qquad \text{(Maths. 7)}$$

avec u la commande appliquée, via le PWM, à l'onduleur, $\lambda$ est fixé et défini par le bloc limiteur de saturation à 420V (voir Fig. 12). Ensuite, l'action du control sur $\dot{\mathbb{S}}$ est proportionnelle à $\frac{K_2}{L_{f1} L_{f2} C_f} u$, ce qui explique le choix de $K_0$, $K_1$ et $K_2$ en (7) :

$K_0$ = 306000000, $K_1$ = 35000 et $K_2$ = 1

Dans ce contexte, il est important de signaler que la fonction "*sign*" dans (Maths. 7) a été approximée en fonction *"sigmoïde" sign* $\mathbb{S} = \frac{\mathbb{S}}{|\mathbb{S}| + \varepsilon}$ avec $\varepsilon = 2 \times 10^8$

**SMC avec augmentation artificielle du degré relatif (AIRD)**

Nous étendons le système (Maths. 4) comme suit :

$$x_4 = u, \, \dot{x}_4 = v$$

avec *v* la nouvelle control, le système, dans ce cas, devient

$$\dot{x} = A_e x + B_e v + P_e w, \quad y = C_e x, \quad C_e = [0 \ 1 \ 0 \ 0]$$

$$\text{(Maths. 8)}$$

et

$$A_e = \begin{bmatrix} -\frac{R_{f1}}{L_{f1}} & 0 & -\frac{1}{L_{f1}} & \frac{1}{L_{f1}} \\ 0 & -\frac{R_{f2}}{L_{f2}} & \frac{1}{L_{f2}} & 0 \\ \frac{1}{C_f} & -\frac{1}{C_f} & 0 & 0 \\ 0 & 0 & 0 & 0 \end{bmatrix}, B_e = \begin{bmatrix} 0 \\ 0 \\ 0 \\ 1 \end{bmatrix}, P_e = \begin{bmatrix} 0 \\ \frac{-1}{L_{f2}} \\ 0 \\ 0 \end{bmatrix}$$

Etant donné que le degré relatif r = 4 du système (9), la variable de glissement est choisie de la forme :

$$\mathbb{S}_e = K_0\, e + K_1\, \dot{e} + K_2\, \ddot{e} + K_3\, \dddot{e} \qquad\qquad \text{(Maths. 9)}$$

avec

$$e = i_{inj} - i_{ref}.$$

La dérivée par rapport au temps de la surface de glissement (Maths. 9) s' obtient :

$$\dot{\mathbb{S}}_e = K_0\, \dot{e} + K_1\, \ddot{e} + K_2\, \dddot{e} + K_3\, F\left(i_f,\ i_{inj}, v_c, \frac{d^4 i_{ref}}{dt^4}\right) + K_3 \left(\frac{1}{L_{f1} L_{f2} C_f}\right) v \ \text{(Maths. 10)}$$

avec

$$F = \frac{-d^4 i_{ref}}{dt^4} - \left(\frac{R_{f1}}{L_{f1} L_{f2} C_f} + \frac{R_{f2}}{L_{f2}^2 C_f}\right)\frac{di_f}{dt} + \left[-\left(\left(\frac{R_{f2}}{L_{f2}}\right)^2 - \frac{1}{L_{f2} C_f}\right)\frac{R_{f2}}{L_{f2}} + \frac{R_{f2}}{L_{f2}^2 C_f}\right]\frac{di_{inj}}{dt} - \left[\left(\left(\frac{R_{f2}}{L_{f2}}\right)^2 - \right.$$

$$\left.\frac{1}{L_{f2} C_f}\right)\frac{1}{L_{f2}} - \frac{1}{L_{f1} L_{f2} C_f}\right]\frac{dv_c}{dt} - \left[\left(\left(\frac{R_{f2}}{L_{f2}}\right)^2 - \frac{1}{L_{f2} C_f}\right)\frac{1}{L_{f2}}\right]\frac{dv_s}{dt} + \left(\frac{R_{f2}}{L_{f2}^2}\right)\frac{d^2 v_s}{dt^2} - \left(\frac{1}{L_{f2}}\right)\frac{d^3 v_s}{dt^3}$$

$$\text{(Maths 11)}$$

Il est à noter que $\dot{e}, \ddot{e}$ et $\dddot{e}$ (en Maths 10) sont obtenues en utilisant un différentiateur en mode glissant d'ordre supérieur.

Les coefficients positifs $K_0$, $K_1$, $K_2$ et $K_3$ sont sélectionnés, dans ce cas aussi, pour assurer une stabilité dynamique exponentielle au système (Maths. 8) avec le taux de convergence souhaité dans le mode glissant défini par $\mathbb{S}_e = 0$.

Nous supposons, dans ce cas, que toutes les perturbations et leurs dérivées, toutes les dérivées de l'erreur de poursuite ainsi que toutes les variables d'état du système sont bornées dans un domaine d'état raisonnable, qui inclus le point de fonctionnement.

Alors, il existe $\eta_1 > 0$ tel que $\left|\dot{\mathbb{S}}_e\right|_{v=0} \leq \eta_1$ et la condition d'existence d'un mode glissant $\mathbb{S}.\dot{\mathbb{S}} < 0$ pour $\mathbb{S}_e \neq 0$ peut être facilement réalisé par le SMC

$$v := -\lambda \, sign \, (\mathbb{S}_e) \qquad\qquad (\text{Maths. 12})$$

où la valeur de $\lambda = 10^7$ est choisie pour limiter l'effet des perturbations causées par la dérivée supplémentaire issue de l'augmentation artificielle du degré relatif.

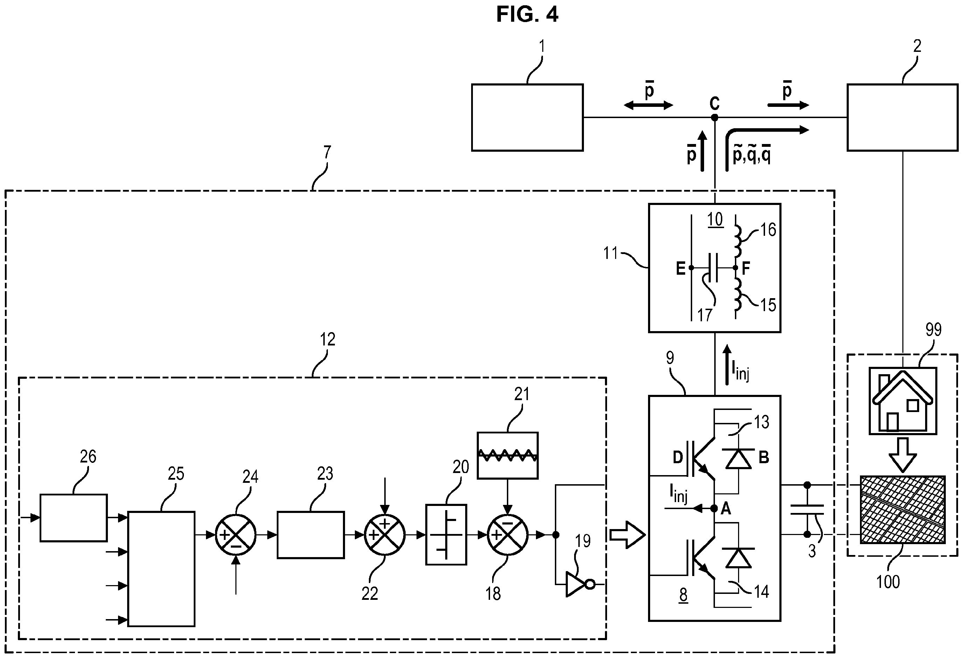

Enfin, une commande continue $u = \int v \, dt$ est générée et limitée par le bloc de saturation à 420V (voir Fig. 12). Ceci est reflété dans le schéma de la Fig. 4 par un intégrateur à la sortie du contrôleur SMC. Il est à noter que $\dot{\mathbb{S}}_e$ est proportionnel à $\frac{K_3}{L_{f1} \, L_{f2} \, C_f} \, v$, ce qui explique le choix de $K_0$, $K_1$, $K_2$ et $K_3$ en (Maths 10) :

$$K_0 = 1.7576e + 13, \; K_1 = 2.0280e + 09 \text{ et } K_2 = 78000 \text{ et } K_3 = 1$$

## RESULTATS DE SIMULATION DE L'ONDULEUR COMMANDE SELON L'INVENTION

### Résultats de simulation avec Matlab-Simulink

Les simulations sont réalisées, dans un premier temps, via un simple schéma de Simulink. Dans ce schéma, les courants harmoniques de références identifiés $I_{ref}$ sont modélisés par des sources de courant des rangs 5, 7, 11, 13, 17 et 19, qui représentent le même spectre harmonique du courant que nous allons analyser via une étude de cas ci-après. Les simulations sont effectuées en employant d'abord le SMC classique puis le SMC avec une fonction sigmoïde et enfin avec le SMC associé à l'algorithme AIRD.

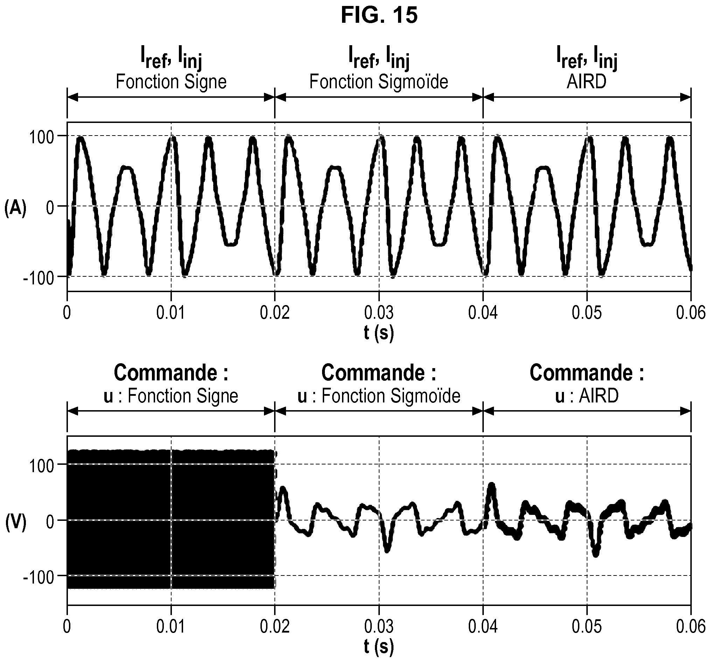

La Fig. 15 trace les courants monophasés $I_{ref}$, $I_{inj}$ (identifié et injecté respectivement) ainsi que le signal de control de l'onduleur u. Nous observons qu'une poursuite très précise est assurée par la commande discontinue (à fréquence de commutation variable et très élevée) du SMC classique ainsi que par une commande continue (à fréquence de commutation fixée par le PWM) de l'algorithme AIRD. Cependant, la méthode de SMC avec une fonction sigmoïde assure une poursuite légèrement dégradée mais largement acceptable.

### Résultats de simulation avec Matlab®-Simulink®-Simscape Power system® (Etude de Cas)

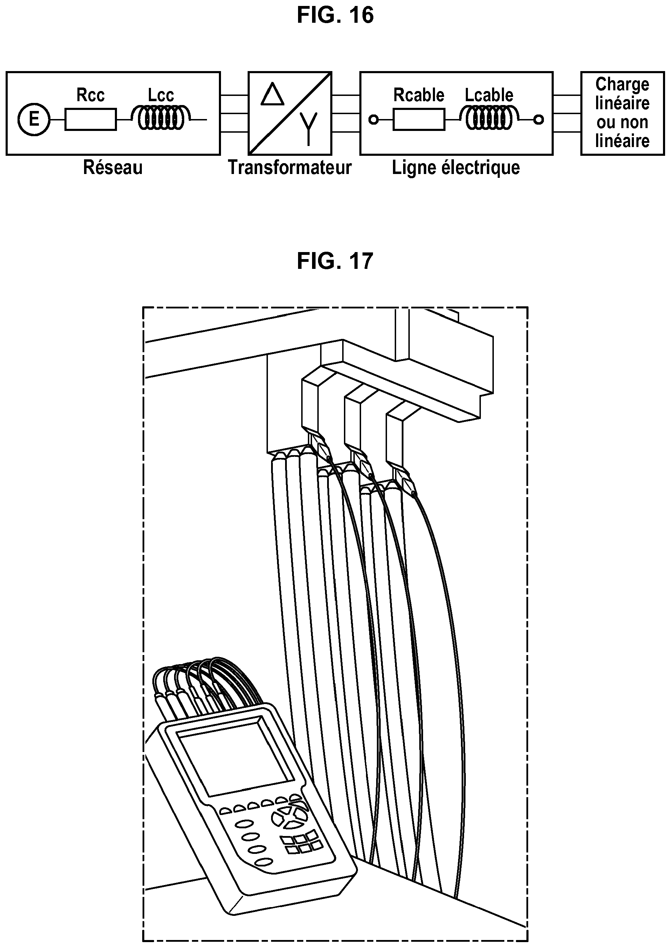

Il s'agit de l'usine de textile de Melaiece située dans la zone industrielle de Sheikh Najjar, à Alep, en Syrie ; le réseau électrique de l'usine est présenté via la Fig. 16.

La ligne de production de cette usine contient 56 moteurs asynchrones dont 40, commandés par des onduleurs de puissance et dont la puissance nominale varie entre 0.25 et 75 *kW.* Le facteur de puissance de l'usine est de 0.7 sans compensation de la puissance réactive, alors il remonte jusqu'à 0.98 avec compensation via des bancs de batteries de condensateurs commandés.

## MODELISATION DE RESEAUX BASSE TENSION

Compte tenu du nombre important des machines commandées dans un site industriel (40 dans notre cas), il devient difficile, voire impossible, de modéliser les réseaux électriques de ces installations.

Une première contrainte est matérielle, en effet il faut autant d'appareils de mesure que de machines commandée (40 dans notre cas : il s'agit des dispositifs d'analyse de la qualité d'énergie, représentés en figure 17).

De plus, il s'avère difficile d'effectuer une simulation d'un réseau industriel à plusieurs niveaux de tension, contenant plusieurs transformateurs de puissance avec de longs câbles et lignes électriques, ainsi que des dizaines de machines commandées et associées à plusieurs filtres actifs de dépollution.

L'idée ici est de remplacer les machines commandées par leurs courants (actif, réactif et harmoniques) délivrés par les dispositifs d'analyse.

Dans ce cas, un dispositif d'analyse va être installé à l'entrée de chaque ligne de production, donc uniquement un appareil de mesure par une ligne de production au lieu d'un appareil de mesure par machine.

Du point de vu informatique, le schéma de simulation n'est plus lord car des sources de courant, dont le nombre est limité par un rang harmonique maximal, fixé théoriquement à 50, vont remplacer le modèle des dizaines de machines commandées.

Il est à noter qu'une source de courant est toujours associée à une résistance très élevée (de quelques M $\Omega$) connectée en parallèle.

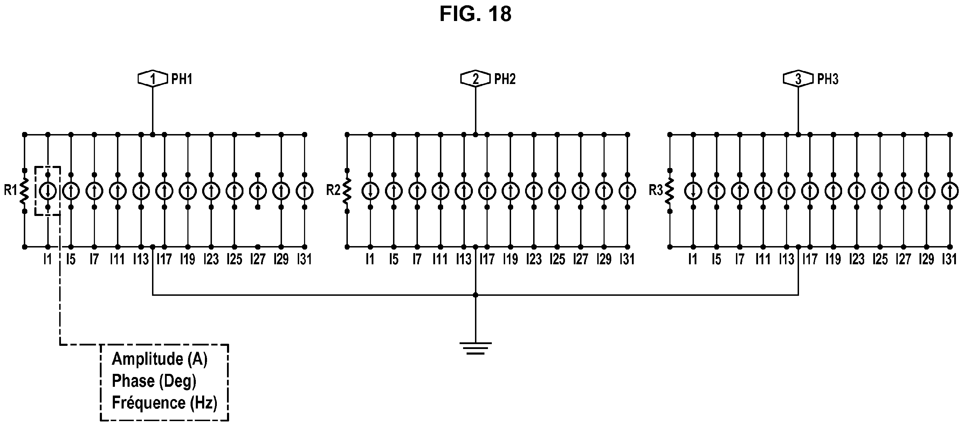

La Fig. 18 montre les sources des courants triphasés, qui modélisent la consommation globale d'énergie de la ligne de production de l'usine étudié : le courant fondamental de la phase Ph1 est de 1194 A, avec un facteur de puissance de cos(67.6)=0.38, en retard.

Le sens de passage des courants est adopté suivant la convention du sens du transit des puissances dans un réseau électrique : les courants harmoniques sont perturbateurs, donc ils sont injectés par la charge dite polluante, alors que le courant fondamental est fourni par le réseau.

Il est à noter que nous pouvons remplacer les courant fondamentaux par une charge R-L triphasée ; les sources des courants fondamentaux I1 seront, dans ce cas, enlevées du modèle précédent.

Validation du modèle proposé

Afin de modéliser la ligne de production de l'usine de textile étudiée, nous effectuons des mesures électriques à l'entrée de la ligne de production, comme le montre la Fig. 17.

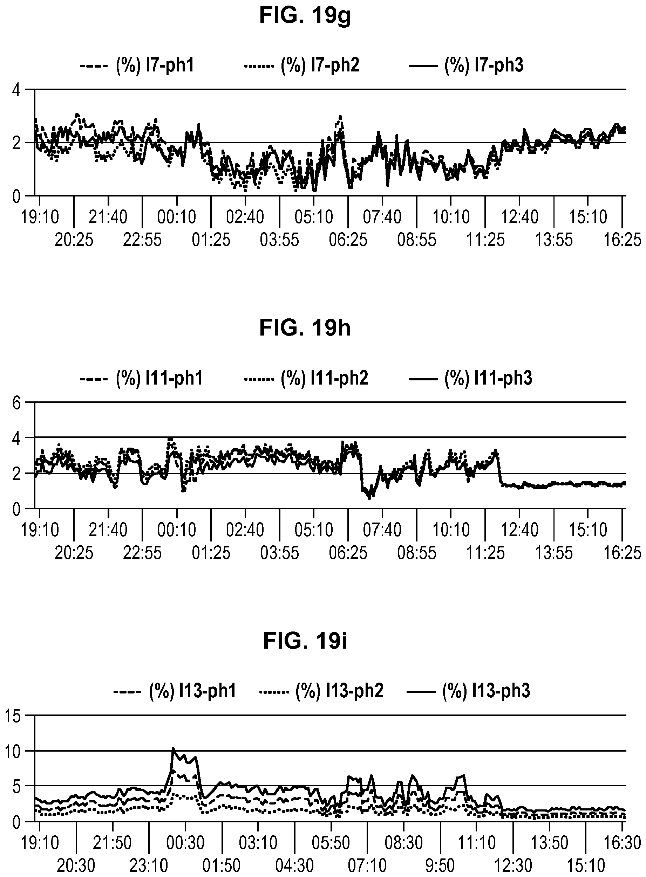

Les Figures 19 présentent ces mesures.

La figure 19a représente les tracés triphasés (Ph1, Ph2 et Ph3) des courants de la charge totale IL123 en A.

La figure 19b représente les tensions du réseau électrique Vs123 en V.

La figure 19c représente les facteurs de puissance PF123.

La figure 19d représente les distorsions harmoniques totales THD des courants de la charge totale THDi123 en %.

La figure 19e représente les distorsions harmoniques totales des tensions du réseau THDv123 en %.

Les figures 19f à 19i représentent respectivement les taux de distorsion harmonique individuelle pour les rangs 5, 7, 11 et 13 des courants des charges pour chacune des phases, les taux de distorsion étant exprimés en %.

Il est à noter que ces mesures ont été limitées par le rang harmonique maximal 50 (50x 50 Hz).

Enfin, les paramètres du réseau électrique, présenté en Fig. 15, sont quantifiés sur le Tableau II.

Tableau II. Fiche technique des composants électriques constituant le réseau traité

| **Electrical Network** | |
|---|---|
| es, Ssc, Rsc, Lsc | 20kV, 500MVA, 0.253$\Omega$, Ls=0.002425H |
| **Power Transformer** | |
| $S_n$, $\Delta P_{Cu}$, $\Delta$Po, $U_{cc}$,$I_o$ | 1MVA, 10.5kW, 1.7kW, 6%, 1.3% |
| **Electrical Cable** | |
| 3x300 mm2, Len=20 m | Xcable=0.16$\Omega$/km, Rcable=0.059 $\Omega$/km |

En se basant sur les mesures présentées en figures 19a à 19i, nous choisissons l'instant où la distorsion harmonique de tension est la plus élevée ; il s'agit de l'instant (22h:05:00). L'état du réseau électrique, à cet instant, est regroupé dans le Tableau III.

Tableau III. état du réseau électrique a l'instant choisi

| | **DATE** | **Temps** | **Hz** |
|---|---|---|---|
| | 03/10/2009 | 22:05:00 | 49.98 |
| | **Ph 1** | **Ph 2** | **Ph 3** |
| **Vs(V)** | 224.5 | 223.8 | 224.2 |
| **$I_L$ (A)** | 522.19 | 518.3 | 507.1 |
| **$P_{Load}$ (W)** | 114379,2 | 114054,2 | 110071,88 |
| **$Q_{Load}$ (VAR)** | 18812,18 | 15860,68 | 24532,81 |
| **$S_{Load}$ (VA)** | 116769,1 | 115968,4 | 113611,6 |
| **PF** | 0,97 | 0,98 | 0,96 |
| **THD-Vs (%)** | 6,7 | 6,2 | 6,8 |
| **THD-$I_L$ (%)** | 11,6 | 10,7 | 12 |
| **Ih5 (%)** | 11 | 10,4 | 11,5 |
| **Ih7 (%)** | 2,8 | 1,7 | 2,4 |
| **Ih11 (%)** | 1,7 | 1,2 | 1,4 |
| **Ih13 (%)** | 1,4 | 0,9 | 1,1 |

(suite)

|  | Ph 1 | Ph 2 | Ph 3 |
|---|---|---|---|
| **Ih17 (%)** | 1 | 0.5 | 1.1 |
| **Ih19 (%)** | 0.9 | 0 | 0.7 |

Dans le Tableau III, les grandeurs $P_{Load}$, $Q_{Load}$, $S_{Load}$, respectivement sont les puissances active, réactive et apparente de la charge globale de la ligne de production.

En se basant sur les mesures réelles ainsi que les fiches techniques présentées respectivement via la Fig. 18-19 et le Tableau II, des simulations, dans les domaines temporel et fréquentiel, ont été effectuées.

Les Figures 20a à 20g représentent les valeurs triphasées suivantes :

- la figure 20a représente les courants et les harmoniques de la charge totale sur la phase ph1 (IL1= 520.7841 A),
- La figure 20b représente les courants et les harmoniques de la charge totale sur la phase ph2 (IL2= 518.38 A),
- la figure 20c représente les courants et les harmoniques de la charge totale sur la phase ph3 (IL3= 507.13 A),
- la figure 20d représente les tensions simples du réseau (Vs1 = 223.9 V, Vs2= 223.07 V, Vs3= 223.68 V),
- la figure 20e représente les facteurs de puissance (PF1 =0.967, PF2= 0.978, PF3= 0.959),
- la figure 20f représente les taux de distorsion harmonique sur les différentes phases, et notamment le THD-V (THD-Vs1 = 6.46%, THD-Vs2= 5.9%, THD-Vs3= 6.65%), ainsi que le THD-I (THD-I1= 11.65%, THD-I2= 10.76%, THD-I3= 11.95%).

Les figures 20a à 20c permettent d'estimer le taux de distorsion individuelle des courants des harmoniques de la charge totale : I5-ph1,2,3= (11.02 %, 10.42, 11.51%), I7-ph1,2,3= (2.72%, 1.78%, 2.36%), I11-ph1,2,3 = (1.71%, 1.27%, 1.36%), I13-ph1,2,3= (1.5%, 1.08%, 1.17%), I17-ph1,2,3= (1.13%, 0.61%, 1.17%), I19-ph1,2,3= (0.94%, 0%, 0.72%).

En comparant les résultats de simulation avec les mesures présentées dans la Fig. 19 et le Tableau. 3, il est observé que toutes les quantités (réelles et mesurées) sont presque identiques, avec une erreur maximale du 3%. Ces résultats valident les modèles proposés et plus particulièrement celui des charges non linéaires (des machines commandées par des convertisseurs de puissance (onduleurs, redresseurs, etc.)). A partir de ces résultats, nous pouvons considérer que les résultats qui vont suivre sont valides aussi.

**Résultat des simulations du Filtre actif installé dans le réseau de l' usine étudiée**

Dans cette partie, nous allons valider l'emploi du filtre actif associé au filtre LCL avec les algorithmes de control, le SMC classique, le SMC avec une fonction sigmoïde ainsi que le SMC avec la méthode AIRD.

La fiche technique des composants constituant le filtre actif, est présentée via le Tableau IV.

TABLEAU IV. FICHE TECHNIQUE DU FILTRE ACTIF PARALLELE

| **Filtre actif parallèle** | |
|---|---|
| Filtre de sortie LCL | $L_{f1}$=90 µH, $R_{f1}$ = 5 mΩ<br>$L_{f2}$=100 µH, $R_{f2}$ = 5 mΩ<br>$C_f$= 130 µF, |
| Condensateur de stockage | C= 0.6 mF, $V_{dc}$=840 V |
| Fréquence de coupure du LCL | 2000 Hz |
| Fréquence de commutation de la MLI | 16 kHz |

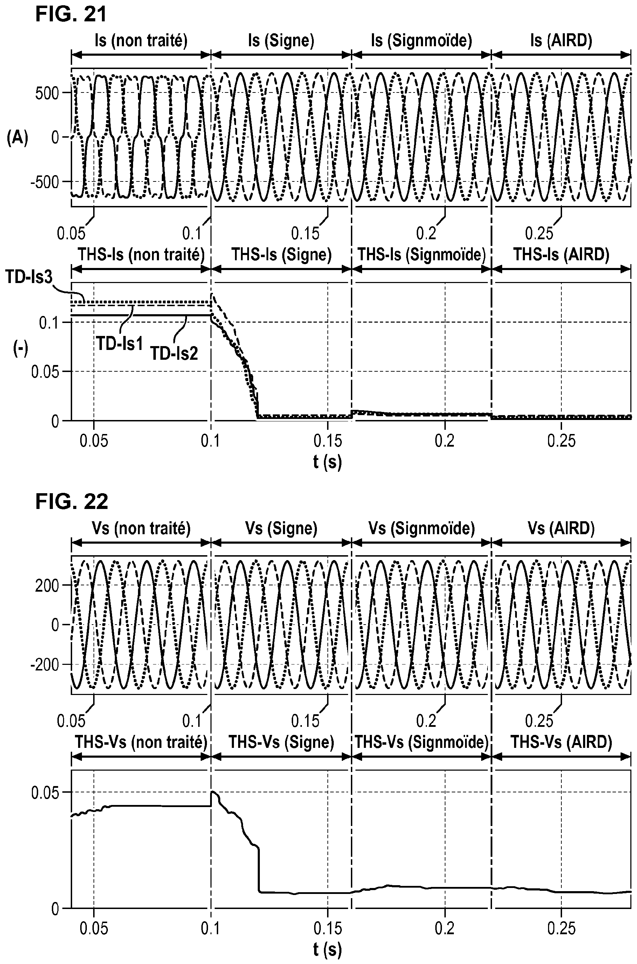

La Fig. 21 présente la simulation (avant et après filtrage) des courants triphasés du côté réseau $I_{s123}$, ainsi que le THD du courant de la phase 1 ($THD - I_s$).

Le filtre actif est amorcé après 5 périodes du secteur (jusqu'à 0.1 s) ; il va fonctionner, d'abord pendant 3 période (jusqu'à 0.16 s) avec le SMC classique (à commande discontinue).

Après, pendant 3 périodes (jusqu'à 0.22 s), il va continuer avec le SMC à commande continu (associé à une fonction sigmoïde).

Enfin après 0.22 s et jusqu'à la fin de la simulation, (0.28 s), le filtre actif va être commandé par une commande continue issue du SMC avec l'algorithme AIRD.

On peut déduire de la figure 21 que malgré une tension déséquilibrée du réseau, ainsi que la présence du filtre LCL, toutes les méthodes de control assurent une poursuite quasi parfaite, reflétée, après filtrage, par une forme sinusoïdale du courant du côté réseau électrique.

Ceci peut être observé, par des THD négligeables des courants triphasés après filtrage.

En effet, le (*THD - I_s*) après filtrage est de : 0.4%, 0.8%, 0.5%, ces valeurs étant les plus élevées respectivement des méthodes de contrôle, SMC à commande discontinue (classique), SMC à commande continue (avec une fonction sigmoïde) et SMC à commande continue (avec la méthode AIRD). Il est à noter que les THDs des courants avant l'activation du filtre actif était respectivement pour les trois phases (11.6%, 10.7% et 12%).

La réduction significative du THD du courant conduit, comme le montre la Fig. 22, à une réduction très prononcée du THD de la tension au point de raccordement ; les (*THD - V_s*) passent des (6.7%, 6.2% et 6.8%) avant filtrage aux (0.28%, 0.5% et 0.3%) après filtrage, respectivement pour les méthodes de control, SMC discontinu (classique), SMC continu (avec une fonction sigmoïde) et SMC continu (avec la méthode AIRD).

Il est à noter que les normes internationales (ex : IEEE STD 519-2014) imposent un THD maximale de tension entre 5%- 8% dans les zones industrielles, alors que les recommandations d'EDF exigent un taux total de la distorsion harmonique de tension inférieur à 1.6% pour chaque récepteur.

Calcul et intégration du point de puissance maximale dans le schéma contrôle-commande du filtre actif :

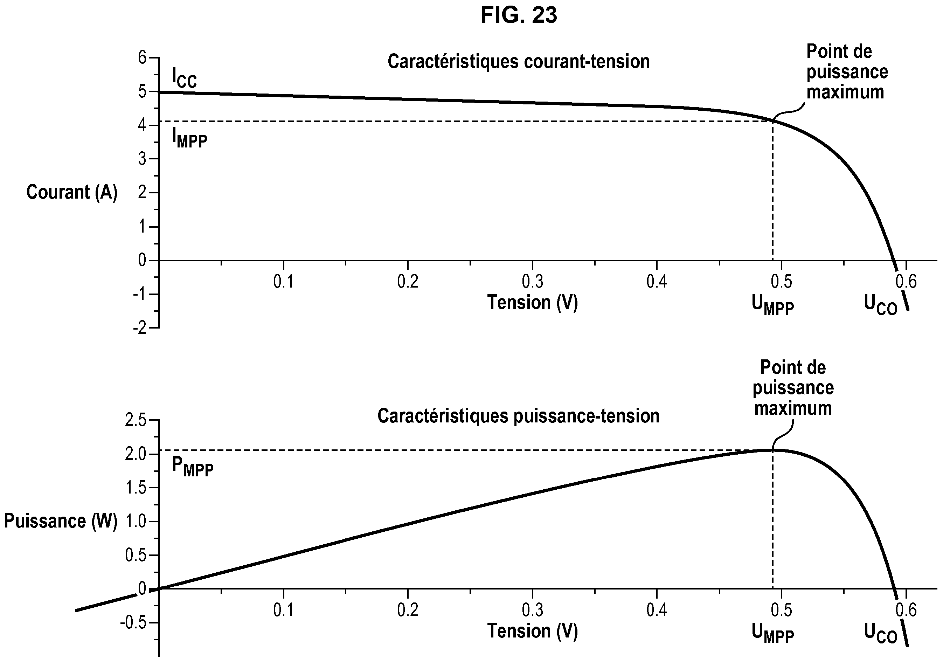

L'objectif ici est de poursuivre le point de puissance maximale d'un générateur photovoltaïque, afin d'augmenter le rendement de ce système de génération. La Fig. 23 montre les quatre paramètres caractérisant le fonctionnement d'un panneau/générateur PV ; il s'agit du courant de court-circuit $I_{cc}$, de la tension à vide $V_{co}$, du courant de la puissance maximale $I_{mpp}$ et de la tension de la puissance maximale $V_{mpp}$ (par conséquent la puissance maximale disponible au sein du générateur PV : $P_{mpp} = V_{mpp} \times I_{mpp}$).

Dans cette invention, l'algorithme employé pour l'extraction du point de puissance maximale est l'algorithme P&O (en anglais « *Perturb and Observe* »), qui se base sur la perturbation et l'observation de la tension du générateur PV, jusqu'à l'obtention de la tension maximale qui correspondra au point MPPT.

Boucle de régulation de la tension continue (poursuite de la puissance maximale) :

Nous allons profiter de la boucle de régulation de la tension du condensateur, du côté continu de l'onduleur, pour assurer la poursuite de la puissance maximale du générateur PV. En effet, dans le cas d'un filtre actif parallèle qui n'est pas connecté à un générateur PV, le condensateur de stockage d'énergie se régule (se charge avec un maintien d'une tension constante) via le réseau électrique, à travers l'onduleur, pour compenser les pertes par effet Joule des composants d'électronique de puissance de l'onduleur et du filtre de sortie LCL. La tension du condensateur $V_{dc}$ doit poursuivre une tension de référence $V_{dc-ref}$ dont l'amplitude est choisie pour renforcer la dynamique du système, tout en respectant le dimensionnement des composants électriques du filtre actif parallèle.

Dans cette invention, la même boucle de régulation de la tension du condensateur est employée pour assurer la poursuite du point de puissance maximale en se basant sur la poursuite de la puissance $P_{MPP}$ et ne pas du courant $I_{MPP}$. En effet, contrairement aux méthodes de régulation du condensateur qui adoptent la poursuite du courant $I_{MPP}$, cette méthode va extraire directement la puissance maximale du générateur PV.

Modélisation de la boucle de régulation de la tension du condensateur :

La relation entre la puissance active produite par le générateur PV et la tension aux bornes du condensateur peut être écrite sous la forme :

$$P_{pv} = \frac{d}{dt}\left(\frac{1}{2}\,C_{dc}\,V_{dc}\right)$$

(Maths 13)

La relation (Maths 13) étant non linéaire, et pour des petites variations de la tension $V_{dc}$ autour de sa référence $V_{dc-ref}$, elle peut être linéarisée via la relation suivante :

$$P_{pv} = C_{dc}\,V_{dc-ref}\,\frac{d}{dt}(V_{dc})$$

(Maths 14)

Il est à noter que pour: $V_{dc\text{-}ref} = V_{MPP}$, on aura $P_{pv} = P_{MPP}$. Par conséquent, la tension du condensateur calculée dans le domaine de Lablace devient :

$$V_{dc}(s)\big|_{V_{dc}=V_{MPP}} = \frac{P_{MPP}(s)}{V_{dc-ref}\, C_{dc}\, s}$$

(Maths 15)

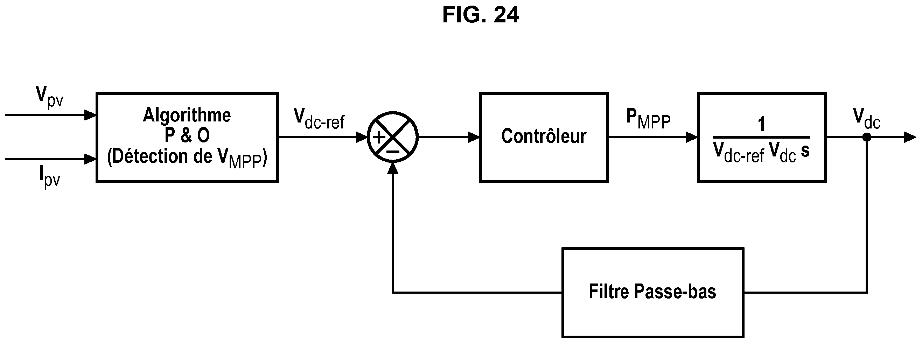

A partir des relations (Maths 14) et (Maths 15) et en employant un régulateur linéaire (Proportionnel - Intégral), la boucle de régulation de la tension continue $V_{dc}$ et par conséquent la puissance $P_{MPP}$ peuvent être présentées via la Fig. 24. Le Choix des paramètres de ce contrôleur assure une poursuite rapide et précise de la puissance maximale du générateur PV. Il est à noter que le signal mesuré de la tension $V_{dc}$ sera filtré des fluctuations à 300 Hz ou autres, via un filtre passe-bas du deuxième ordre *(voir Fig. 24)*.

Intégration de la boucle de poursuite de la puissance maximale au sein d'un filtre actif :

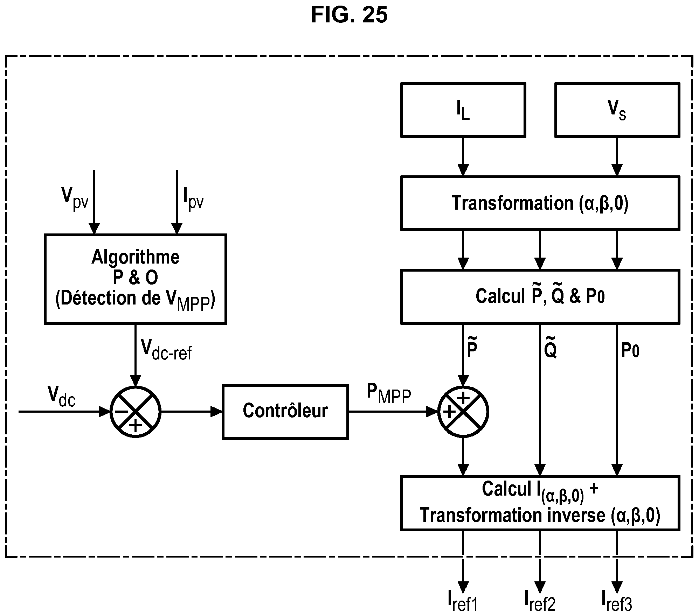

L'avantage de la poursuite de $P_{MPP}$ (par rapport à $I_{MPP}$) est de pouvoir intégrer (avec le moins d'opérations de calculs possibles) la boucle de poursuite de $P_{MPP}$ dans l'algorithme d'identification des courants perturbateurs de la partie contrôle-commande du filtre actif parallèle. Dans ce cas, la tension de référence $V_{dc\text{-}ref}$ de l'algorithme d'identification/régulation de la tension du condensateur du filtre actif, est remplacée par la tension de la puissance maximale $V_{MPP}$ ($V_{dc\text{-}ref} = V_{MPP}$) issue de l'algorithme (P & O) comme le montre la Fig. 25. De cette figure 25, la sortie du contrôleur PI étant la puissance maximale $P_{MPP}$ du générateur PV, ce signal est rajouté à la puissance perturbatrice active $\tilde{P}$ délivrée, entre autre, par l'algorithme d'identification des courants perturbateur ; les puissances instantanées perturbatrices (réactive $\tilde{Q}$ et homopolaire $P_0$) sont aussi calculées. En effet, cet algorithme assure, dans un premier temps, le calcul des puissances instantanées perturbatrices, causées par les courants perturbateurs non actifs présents dans le courant de la charge $I_L$, dans le repère $\alpha$, $\beta$ et 0. Le calcul des courants de référence $I_{ref123}$ se fait via un passage inverse, d'abord calculé dans le même repère $\alpha$, $\beta$ et 0 puis dans le repère triphasé. Ces courants de références du filtre actif ($I_{ref123}$) contiennent alors les courants perturbateurs ainsi que le courant maximal du générateur PV : $I_{MPP}$.

Par ailleurs, la poursuite du courant $I_{MPP}$, à la place de $P_{MPP}$, impliquerait la multiplication de $I_{MPP}$ par trois fonctions *sinus* (déphasées d'un tiers de période) d'amplitude unitaire et d'angle issu de la PLL (angle de la composante directe de tension du réseau électrique $V_s$). Cela demande plus de calculs et plus de précisions de la part de la PLL.

**Revendications**

1. Dispositif de compensation (7) de courant du type filtre actif parallèle à génération d'énergie renouvelable, apte à être connecté :

   ➤ à son entrée, en aval d'au moins une unité de puissance à génération d'énergie renouvelable (100) couplée à un élément de stockage d'énergie (3), et
   ➤ en parallèle, à sa sortie, en amont à un point de raccordement (C) entre d'une part un réseau électrique donné (1), et d'autre part des charges (2) électriques non linéaires et linéaires,

   le dispositif de compensation de courant (7) présentant :

   - une unité de conversion (8) de puissance, comportant au moins un onduleur de tension (9) générant un courant alternatif, avec une bande de fréquence allant de 50 à 2500Hz, couvrant :

     a) toute la bande de fréquences du courant perturbateur non actif qui présente : tout ou une partie des harmoniques, et à la fréquence fondamentale tout ou une partie de la puissance réactive et/ou un déséquilibré,
     b) ainsi que le courant actif maximal généré par l'unité de puissance à génération d'énergie renouvelable (100);

   - une unité de filtrage (10) de sortie, comportant un filtre (11) de type LCL pour chacune des phases et un neutre, et connecté : d'une part en aval de l'onduleur (9) de tension, et d'autre part en parallèle au point de raccordement (C ) entre le réseau (1) électrique donné et les charges (2) électriques non linéaires et linéaires, le filtre (11) de sortie LCL étant dimensionné pour bloquer les composantes harmoniques dues à la commutation de l'onduleur (9) ;
- une unité de contrôle-commande (12) comprenant une unité de calcul (25) des courants de référence, les courants de référence comprenant :

i. au moins un courant perturbateur non actif destiné à être injecté au point de raccordement en opposition de phase pour annuler, du côté réseau électrique (1), les perturbations du signal générées par les charges non linéaires et linéaires (2),
présentant tout ou une partie des harmoniques, et à la fréquence fondamentale tout ou une partie du courant réactif et/ou un déséquilibré,
ii. au moins un courant actif de recharge de l'élément de stockage (3),
iii. au moins un courant actif correspondant à un point de puissance maximale de l'unité de puissance à génération d'énergie renouvelable (100),

l'unité de contrôle-commande (12) comprenant également :

un dispositif de pilotage de commutation (21) qui commande la commutation de l'onduleur (9) via un contrôleur non linéaire (23) par mode glissant continu, adapté au filtre (11) de type LCL qui assure en boucle fermée le contrôle de toute la bande de fréquence de 50 à 2500 Hz pour l'injection du courant perturbateur non actif et du courant actif,
en fonction de l'identification des courants de référence par l'unité de calcul (25) ;
la commande de commutation de l'onduleur (9) étant réalisée de manière à laisser passer à travers l'unité de filtrage (10) de sortie au point de raccordement (C) :

• une partie ou la totalité des courants perturbateurs non actifs injectés en opposition de phase comprenant des courants harmoniques, ainsi que des courants réactif et déséquilibré à la fréquence fondamentale, dans les charges (2) électriques non linéaires et linéaires,
pour satisfaire la demande de consommation d'énergie non active des charges (2) électriques non linéaires et linéaires, tout en dépolluant le réseau (1) électrique de ces courants perturbateurs non actifs ;
• un courant actif correspondant à un point de puissance maximale disponible au sein de l'unité de puissance à génération d'énergie renouvelable (100), pour satisfaire la demande de consommation d'énergie active des charges électriques (2) non linéaires et linéaires, tout en assurant la recharge de l'élément de stockage (3).

2. Dispositif de compensation (7) selon la revendication 1, dans lequel la commande de commutation de l'onduleur (9) est réalisée de manière à laisser passer aussi à travers l'unité de filtrage (10) de sortie :
une partie du courant actif, dans le réseau (1) électrique donné dépourvu alors des courants perturbateurs non actifs, lorsque la production de l'unité de puissance à génération d'énergie renouvelable (100) est supérieure à la puissance consommée par les charges (2) électriques non linéaires et linéaires.

3. Dispositif de compensation (7) selon l'une des revendications 1 à 2, dans lequel l'unité de puissance à génération d'énergie renouvelable (100) est couplée sans hacheur ni autres dispositifs d'électronique de puissance à l'élément de stockage d'énergie (3).

4. Dispositif de compensation (7) selon l'une des revendications 1 à 3, dans lequel l'unité de contrôle-commande (12) comporte :

- un hacheur configuré pour maintenir une tension continue constante prédéfinie aux bornes de l'élément de stockage d'énergie (3) de l'onduleur (9), indépendamment du niveau de tension de la source (100) d'énergie renouvelable pour assurer un filtrage harmonique inchangé.
- un double hacheur pour le cas d'un réseau électrique îloté.

5. Dispositif de compensation (7) selon l'une des revendications 1 à 4, dans lequel l'unité de contrôle-commande (12) comporte un contrôleur par mode glissant continu de 1$^{er}$ ordre ou d'un ordre supérieur, présentant une surface de glissement adaptée de 1$^{er}$ ordre, 2$^{ème}$ ordre, de 3$^{ème}$ ordre ou autres.

6. Dispositif de compensation (7) selon l'une des revendications 1 à 5, dans lequel l'unité de contrôle-commande (12) comporte au moins l'un des deux contrôleurs à mode glissant suivants :

- l'un comportant une fonction Signe approximée en fonction Sigmoïde avec une surface de glissement adaptée de 2ème ordre ; et
- l'autre est basé sur une méthode d'augmentation artificielle du degré relatif comportant une fonction Signe avec une surface de glissement adaptée de 3ème ordre, suivie par un intégrateur.

7. Dispositif de compensation (7) selon l'une des revendications 1 à 6, dans lequel le dispositif de pilotage de commutation (21) comporte un dispositif de modulation de largeur d'impulsion (MLI), dans lequel la commande est modulée, afin de faire fonctionner l'onduleur (9) à une fréquence de commutation fixe.

8. Dispositif de compensation (7) selon l'une des revendications 1 à 7, dans lequel l'unité de contrôle-commande (12) comporte un régulateur (62) de type PI, ou autres, avec une sortie qui représente la puissance maximale de l'unité de puissance à génération d'énergie renouvelable (100), pour réguler la tension continue de l'élément de stockage (3) tout en assurant une poursuite du point de puissance active maximale de l'unité de puissance à génération d'énergie renouvelable (100),
le dispositif de compensation (7) comportant une boucle de régulation de la tension continue aux bornes de l'élément de stockage capacitif (3) qui fournit à la sortie du contrôleur (62) la puissance maximale, la tension aux bornes de l'élément de stockage capacitif (3) étant égale à la tension de la puissance maximale de l'unité de puissance à génération d'énergie renouvelable (100).

9. Dispositif de compensation (7) selon les revendications 2 à 3 et selon la revendication 8, comportant une unité de calcul des courants de référence (25-A) configurée pour déterminer le courant perturbateur non actif circulant dans la charge (2), et une unité de calcul des courants de référence (25-B) configurée pour calculer, en se basant uniquement sur la puissance, la tension du point de puissance active maximale de l'unité de puissance à génération d'énergie renouvelable (100).

10. Système électrique comprenant un réseau d'alimentation (1), des charges (2) non linéaires /linéaires, au moins une unité de puissance à génération d'énergie renouvelable (100), et un dispositif de compensation (7) selon l'une des revendications précédentes 1 à 9.

11. Système selon la revendication 10, dans lequel l'unité de puissance à génération d'énergie renouvelable (100) est :

- choisie parmi la liste suivante : un ou plusieurs panneaux photovoltaïques, éolienne(s), pile(s) à combustible ou autres,
- couplée, directement à un élément de stockage capacitif (3) en cas d'une production continue, ou via un redresseur de puissance alternatif/continu en cas d'une production alternative.

12. Système selon l'une des revendications 10 à 11, dans lequel le réseau est choisi parmi la liste suivante : le réseau électrique principal, un micro-réseau électrique local îloté ou raccordé au réseau électrique principal, ou un réseau électrique embarqué.

13. Système selon l'une des revendications 10 à 12, comportant en outre un bâtiment intelligent (27), et dans lequel l'unité de contrôle-commande (12) est connectée à une unité de gestion décentralisée (70) du bâtiment intelligent (27), l'unité de contrôle-commande (12) compare la puissance maximale disponible de l'unité de puissance à génération d'énergie renouvelable (100) avec la charge totale du bâtiment intelligent (27).

14. Système selon la revendication 13, dans lequel l'unité de contrôle-commande (12) est configurée pour optimiser la consommation des différents appareils fonctionnant au sein de ce bâtiment intelligent (27) en répartissant les charges correspondant aux charges non-linéaires/linéaires selon au moins deux modes de fonctionnement :

- un premier mode de répartition dit mode de consommation adaptée dans lequel l'unité de contrôle-commande (12) pilote l'unité de gestion décentralisée (70) du bâtiment intelligent (27) de manière à adapter la consommation du bâtiment intelligent avec la production de l'unité de puissance à génération d'énergie renouvelable (100), pour que la courbe de charge totale du bâtiment intelligent présente un facteur de simultanéité maximal correspondant au fonctionnement de toutes les charges du bâtiment en même temps, dans la limite de l'énergie renouvelable produite,
- en cas d'insuffisance de production d'énergie renouvelable, un deuxième mode de répartition dit mode de consommation modulée dans lequel l'unité de contrôle-commande (12) pilote l'unité de gestion décentralisée (70) du bâtiment intelligent (27) de manière à moduler la consommation des appareils du bâtiment intelligent (27) pour tendre à une courbe de charge totale du bâtiment intelligent sensiblement constante en fonction du temps,

- dans le même cas de figure et si le réseau électrique (1) est intelligent, un troisième mode de répartition adapté à la production du réseau électrique (1) intelligent est envisageable.

**15.** Système selon l'une des revendications 10 à 14, comprenant en outre :

- un réseau local (28) connecté au réseau (1), et
- des unités de production de puissance à origine conventionnelle (fossile) (80), et
- un système de gestion semi-décentralisée (29), et
- une pluralité d'unités de puissance à génération d'énergie renouvelable (100) connectées au réseau local (28), par un dispositif de compensation (7), chaque dispositif de compensation (7) étant connecté au système de gestion semi-décentralisée (29) auquel il communique des informations concernant la production d'énergie, actuelle et à venir, de chacune des unités de puissance à génération d'énergie renouvelable (100), et
- une pluralité de postes de consommation correspondant aux charges (2) non linéaires et linéaires, chacun des postes de consommation étant connecté au réseau local (28) et équipé par un dispositif de compensation (7), connecté au système de gestion semi-décentralisée (29) auquel il communique des informations concernant la consommation instantanée et la consommation à venir en fonction du fonctionnement programmé des postes de consommation,
- une pluralité d'unités de puissance à génération d'énergie renouvelable (100) et de charges linéaires et non linéaires (2) des bâtiments intelligents (27) à énergie positive, qui assurent l'autoconsommation et où le surplus éventuel d'énergie est stocké ou échangé avec les autres bâtiments intelligents ou délivré au réseau local (28) via l'unité de contrôle commande (12) du dispositif de compensation (7), en coordination avec le système de gestion semi-décentralisée (29) en cas d'échange avec le réseau local (28).

**16.** Système selon la revendication 15, dans lequel le système de gestion semi-décentralisée (29) est en outre configuré pour assurer la répartition économique de production des unités de production d'énergie conventionnelle (80).

**17.** Système selon la revendication 16, dans lequel le système de gestion semi-décentralisée (29) est en outre configuré pour intervenir, uniquement en cas de besoin, quand la demande totale d'énergie au sein du réseau local (28) est largement supérieure à la production totale, auprès des unités de contrôle décentralisé (70) des bâtiments intelligent (27), via les unités de contrôle-commande (12) des dispositifs de compensation (7), pour les faire basculer vers un mode de consommation modulée.

**18.** Système selon la revendication 17, dans lequel le système de gestion semi-décentralisée (29) est en outre configuré pour piloter la distribution sur le réseau local (28) de la puissance provenant du réseau (1) si la production totale estimée ne couvre pas la demande.


**Patentansprüche**

**1.** Kompensationsvorrichtung (7) für Strom des Typs paralleler aktiver Filter mit erneuerbarer Energieerzeugung, die geeignet ist, angeschlossen zu werden :

> an seinem Eingang stromabwärts von mindestens einer Leistungseinheit zur Erzeugung erneuerbarer Energie (100), die mit einem Energiespeicherelement (3) gekoppelt ist, und
> parallel dazu an seinem Ausgang stromaufwärts an einen Verbindungspunkt (C) zwischen einerseits einem gegebenen Stromnetz (1) und andererseits nichtlinearen und linearen elektrischen Lasten (2),

wobei die Stromkompensationsvorrichtung (7) aufweist:

- eine Leistungsumwandlungseinheit (8), die mindestens einen Spannungswechselrichter (9) umfasst, der einen Wechselstrom mit einem Frequenzband von 50 bis 2500 Hz erzeugt, der folgendes abdeckt:

a) das gesamte Frequenzband des nicht aktiven Störstroms, der alle oder einen Teil der Oberschwingungen und bei der Grundfrequenz alle oder einen Teil der Blindleistung und/oder eine Unsymmetrie umfasst,
b) sowie den maximalen Wirkstrom, der von der Leistungseinheit zur Erzeugung erneuerbarer Energie (100) erzeugt wird;

- eine Ausgangsfiltereinheit (10), die einen Filter (11) vom Typ LCL für jede der Phasen und einen Neutralleiter umfasst und: einerseits stromabwärts des Spannungswechselrichters (9) und andererseits parallel zum Anschlusspunkt (C ) zwischen dem gegebenen Stromnetz (1) und den nichtlinearen und linearen elektrischen Lasten (2) angeschlossen ist, wobei der Ausgangsfilter (11) LCL so dimensioniert ist, dass er die durch das Schalten des Wechselrichters (9) verursachten harmonischen Komponenten blockiert;
- eine Steuer- und Regeleinheit (12), die eine Einheit (25) zur Berechnung von Referenzströmen umfasst, wobei die Referenzströme umfassen :

i. mindestens einen nicht aktiven Störstrom, der dazu bestimmt ist, am Anschlusspunkt gegenphasig eingespeist zu werden, um auf der Seite des Stromnetzes (1) die Störungen des Signals aufzuheben, die von den nichtlinearen und linearen Lasten (2) erzeugt werden,
die alle oder einen Teil der Oberschwingungen aufweisen, und bei der Grundfrequenz alle oder einen Teil des Blindstroms und/oder ein Ungleichgewicht,
ii. mindestens einen Wirkstrom zum Aufladen des Speicherelements (3),
iii. mindestens einen Wirkstrom, der einem Punkt maximaler Leistung der Leistungseinheit zur Erzeugung erneuerbarer Energie (100) entspricht,
die Steuer- und Regeleinheit (12) außerdem umfasst:

eine Schaltsteuervorrichtung (21), die das Schalten des Wechselrichters (9) über einen nichtlinearen Regler (23) durch einen kontinuierlichen Gleitmodus steuert, der an den Filter (11) vom Typ LCL angepasst ist, der in einem geschlossenen Regelkreis die Steuerung des gesamten Frequenzbandes von 50 bis 2500 Hz für die Einspeisung des nicht aktiven Störstroms und des aktiven Stroms gewährleistet,
in Abhängigkeit von der Identifizierung der Referenzströme durch die Recheneinheit (25) ;
wobei die Schaltsteuerung des Wechselrichters (9) so ausgeführt ist, dass sie durch die Ausgangsfiltereinheit (10) am Anschlusspunkt (C ) hindurchgehen lässt:

• einen Teil oder die Gesamtheit der gegenphasig eingespeisten nicht aktiven Störströme, die Oberschwingungsströme sowie Blind- und Grundfrequenzunsymmetrische Ströme in den nichtlinearen und linearen elektrischen Lasten (2) umfassen,

um die Nachfrage nach dem Verbrauch von nicht aktiver Energie der nicht linearen und linearen elektrischen Lasten (2) zu befriedigen, während das Stromnetz (1) von diesen nicht aktiven Störströmen gereinigt wird ;

• einen aktiven Strom, der einem Punkt maximaler Leistung entspricht, der innerhalb der Leistungseinheit zur Erzeugung erneuerbarer Energie (100) verfügbar ist, um den Bedarf an aktivem Energieverbrauch der nichtlinearen und linearen elektrischen Lasten (2) zu befriedigen, während das Aufladen des Speicherelements (3) sichergestellt wird.

2. Kompensationsvorrichtung (7) nach Anspruch 1, wobei die Schaltsteuerung des Wechselrichters (9) so ausgeführt ist, dass auch durch die Ausgangsfiltereinheit (10) durchgelassen wird :
einen Teil des aktiven Stroms in das gegebene Stromnetz (1), das dann frei von nichtaktiven Störströmen ist, wenn die Produktion der Leistungseinheit (100) zur Erzeugung erneuerbarer Energie größer ist als die von den nichtlinearen und linearen elektrischen Lasten (2) verbrauchte Leistung.

3. Kompensationsvorrichtung (7) nach einem der Ansprüche 1 bis 2, wobei die Leistungseinheit zur Erzeugung erneuerbarer Energie (100) ohne Chopper oder andere leistungselektronische Vorrichtungen mit dem Energiespeicherelement (3) gekoppelt ist.

4. Kompensationsvorrichtung (7) nach einem der Ansprüche 1 bis 3, wobei die Steuer- und Regeleinheit (12) umfasst:

- einen Chopper, der so konfiguriert ist, dass er eine vordefinierte konstante Gleichspannung über dem Energiespeicherelement (3) des Wechselrichters (9) unabhängig vom Spannungspegel der Leistungseinheit zur Erzeugung erneuerbarer Energie (100) aufrechterhält, um eine unveränderte harmonische Filterung zu gewährleisten.
- einen doppelten Chopper für den Fall eines inselartig betriebenen Stromnetzes.

5. Kompensationsvorrichtung (7) nach einem der Ansprüche 1 bis 4, wobei die Steuer- und Regeleinheit (12) einen kontinuierlichen Gleitmodus-Controller 1. Ordnung oder höherer Ordnung mit einer angepassten Gleitfläche 1. Ordnung, 2. Ordnung, 3. Ordnung oder dergleichen aufweist.

6. Kompensationsvorrichtung (7) nach einem der Ansprüche 1 bis 5, wobei die Steuer- und Regeleinheit (12) mindestens einen der folgenden zwei Gleitmodus-Controller aufweist:

    - der eine Vorzeichenfunktion umfasst, die als Sigmoidfunktion mit einer angepassten Gleitfläche 2. Ordnung approximiert wird; und
    - der andere basiert auf einer Methode zur künstlichen Erhöhung des Relativgrads, die eine Vorzeichenfunktion mit einer angepassten Gleitfläche 3. Ordnung umfasst, gefolgt von einem Integrator.

7. Kompensationsvorrichtung (7) nach einem der Ansprüche 1 bis 6, wobei die Schaltsteuervorrichtung (21) eine Pulsbreitenmodulationsvorrichtung (PWM) umfasst, bei der die Steuerung moduliert wird, um den Wechselrichter (9) mit einer festen Schaltfrequenz zu betreiben.

8. Kompensationsvorrichtung (7) nach einem der Ansprüche 1 bis 7, wobei die Steuer- und Regeleinheit (12) einen Regler (62) vom PI-Typ oder dergleichen mit einem Ausgang aufweist, der die maximale Leistung der Leistungseinheit zur Erzeugung erneuerbarer Energie (100) darstellt, um die Gleichspannung des Speicherelements (3) zu regeln, während eine Nachführung des Punkts der maximalen Wirkleistung der Leistungseinheit zur Erzeugung erneuerbarer Energie (100) gewährleistet ist,
die Kompensationsvorrichtung (7) eine Regelschleife für die Gleichspannung über dem kapazitiven Speicherelement (3) umfasst, die am Ausgang der Steuereinheit (62) die maximale Leistung bereitstellt, wobei die Spannung über dem kapazitiven Speicherelement (3) gleich der Spannung der maximalen Leistung der Leistungseinheit zur Erzeugung erneuerbarer Energie (100) ist.

9. Kompensationsvorrichtung (7) nach Anspruch 2 bis 3 und nach Anspruch 8, mit einer Referenzstromberechnungseinheit (25-A), die so konfiguriert ist, dass sie den in der Last (2) fließenden nicht aktiven Störstrom bestimmt, und einer Referenzstromberechnungseinheit (25-B), die so konfiguriert ist, dass sie nur auf der Grundlage der Leistung die Spannung des maximalen Wirkleistungspunkts der Leistungseinheit zur Erzeugung erneuerbarer Energie (100) berechnet.

10. Elektrisches System mit einem Stromnetz (1), nichtlinearen/linearen Lasten (2), mindestens einer Leistungseinheit zur Erzeugung erneuerbarer Energie (100) und einer Kompensationsvorrichtung (7) nach einem der vorhergehenden Ansprüche 1 bis 9.

11. System nach Anspruch 10, wobei die Leistungseinheit zur Erzeugung erneuerbarer Energie (100) ist :

    - ausgewählt aus der folgenden Liste: ein oder mehrere Photovoltaikpaneele, Windkraftanlage(n), Brennstoffzelle(n) oder andere,
    - gekoppelt, direkt mit einem kapazitiven Speicherelement (3) im Falle einer kontinuierlichen Erzeugung oder über einen Wechselstrom/Gleichstrom-Leistungsgleichrichter im Falle einer alternativen Erzeugung.

12. System nach einem der Ansprüche 10 bis 11, wobei das Netz aus der folgenden Liste ausgewählt ist: das Hauptstromnetz, ein lokales Mikro-Stromnetz, das inselförmig oder an das Hauptstromnetz angeschlossen ist, oder ein eingebettetes Stromnetz.

13. System nach einem der Ansprüche 10 bis 12, das ferner ein intelligentes Gebäude (27) umfasst, und wobei die Steuer- und Regeleinheit (12) mit einer dezentralen Verwaltungseinheit (70) des intelligenten Gebäudes (27) verbunden ist, wobei die Steuer- und Regeleinheit (12) die maximal verfügbare Leistung der erneuerbare Energie erzeugenden Leistungseinheit (100) mit der Gesamtlast des intelligenten Gebäudes (27) vergleicht.

14. System nach Anspruch 13, bei dem die Steuer- und Regeleinheit (12) so konfiguriert ist, dass sie den Verbrauch der verschiedenen Geräte, die innerhalb dieses intelligenten Gebäudes (27) betrieben werden, optimiert, indem sie die den nichtlinearen/linearen Lasten entsprechenden Lasten nach mindestens zwei Betriebsarten verteilt:

    - einem ersten Verteilungsmodus, genannt angepasster Verbrauchsmodus, in dem die Steuer- und Regeleinheit (12) die dezentrale Verwaltungseinheit (70) des intelligenten Gebäudes (27) so steuert, dass der Verbrauch des intelligenten Gebäudes mit der Produktion der Leistungseinheit zur Erzeugung erneuerbarer Energie (100) angepasst wird, damit die Gesamtlastkurve des intelligenten Gebäudes einen maximalen Gleichzeitigkeitsfaktor aufweist, der dem gleichzeitigen Betrieb aller Lasten des Gebäudes innerhalb der Grenzen der erzeugten erneuerbaren Energie entspricht,

- im Falle einer unzureichenden Erzeugung erneuerbarer Energie einen zweiten Verteilungsmodus, der als Modus des modulierten Verbrauchs bezeichnet wird, in dem die Steuer- und Regeleinheit (12) die dezentrale Verwaltungseinheit (70) des intelligenten Gebäudes (27) so steuert, dass der Verbrauch der Geräte des intelligenten Gebäudes (27) moduliert wird, um eine Gesamtlastkurve des intelligenten Gebäudes anzustreben, die in Abhängigkeit von der Zeit im Wesentlichen konstant ist,

- in demselben Fall und wenn das Stromnetz (1) intelligent ist, ist ein dritter Verteilungsmodus denkbar, der an die Erzeugung des intelligenten Stromnetzes (1) angepasst ist.

**15.** System nach einem der Ansprüche 10 bis 14, ferner umfassend:

- ein lokales Netz (28), das mit dem Stromnetz (1) verbunden ist, und
- Stromerzeugungseinheiten konventionellen (fossilen) Ursprungs (80), und
- ein semi-dezentrales Managementsystem (29), und
- eine Vielzahl von Leistungseinheiten zur Erzeugung erneuerbarer Energie (100), die über eine Kompensationsvorrichtung (7) mit dem lokalen Netz (28) verbunden sind, wobei jede Kompensationsvorrichtung (7) mit dem semi-dezentralen Managementsystem (29) verbunden ist, an das sie Informationen über die aktuelle und zukünftige Energieerzeugung jeder der Leistungseinheiten zur Erzeugung erneuerbarer Energie (100) übermittelt, und
- eine Vielzahl von Verbrauchsstationen, die den nichtlinearen und linearen Lasten (2) entsprechen, wobei jede der Verbrauchsstationen mit dem lokalen Netz (28) verbunden und mit einer Kompensationsvorrichtung (7) ausgestattet ist, die mit dem semi-dezentralen Managementsystem (29) verbunden ist, an das sie Informationen über den momentanen Verbrauch und den zukünftigen Verbrauch in Abhängigkeit vom geplanten Betrieb der Verbrauchsstationen übermittelt,
- eine Vielzahl von Leistungseinheiten zur Erzeugung erneuerbarer Energie (100) und von linearen und nichtlinearen Lasten (2) der intelligenten Gebäude (27) mit positiver Energie, die den Eigenverbrauch sicherstellen und in denen die eventuelle überschüssige Energie gespeichert oder mit den anderen intelligenten Gebäuden ausgetauscht oder über die Steuer- und Regeleinheit (12) der Kompensationsvorrichtung (7) an das lokale Netz (28) abgegeben wird, in Koordination mit dem semi-dezentralen Managementsystem (29) im Falle eines Austauschs mit dem lokalen Netz (28).

**16.** System nach Anspruch 15, wobei das semi-dezentrale Managementsystem (29) zusätzlich so konfiguriert ist, dass es die wirtschaftliche Produktionsverteilung der konventionellen Energieerzeugungseinheiten (80) sicherstellt.

**17.** System nach Anspruch 16, wobei das semi-dezentrale Managementsystem (29) zusätzlich so konfiguriert ist, dass es nur bei Bedarf, wenn die Gesamtenergienachfrage innerhalb des lokalen Netzes (28) die Gesamtproduktion deutlich übersteigt, über die Steuer- und Regeleinheiten (12) der Kompensationsvorrichtungen (7) bei den dezentralen Verwaltungseinheiten (70) der intelligenten Gebäude (27) eingreift, um diese in einen modulierten Verbrauchsmodus umzuschalten.

**18.** System nach Anspruch 17, wobei das semi-dezentrale Managementsystem (29) zusätzlich so konfiguriert ist, dass es die Verteilung von Leistung aus dem Stromnetz (1) auf das lokale Netz (28) steuert, wenn die geschätzte Gesamtproduktion den Bedarf nicht deckt.

**Claims**

**1.** A current compensation device (7) of the parallel renewable energy generation active filter type, configured to be connected :

➢ at its input, downstream of at least one renewable energy generation power unit (100) coupled to an energy storage element (3), and
➢ in parallel, at its output, upstream to a connection point (C) between a given electrical network (1) on the one hand, and non-linear and linear electrical loads (2) on the other hand,

the current compensation device (7) having :

- a power conversion unit (8), comprising at least one voltage inverter (9) generating an alternating current, with a frequency band ranging from 50 to 2500Hz, covering :

a) the entire frequency band of the non-active disturbance current, which has: all or part of the harmonics, and at the fundamental frequency all or part of the reactive power and/or an unbalance,
b) as well as the maximum active current generated by the power unit with renewable energy generation (100);

- an output filtering unit (10), comprising a filter (11) of the LCL type for each of the phases and a neutral, and connected: on the one hand downstream of the voltage inverter (9), and on the other hand in parallel to the point of connection (C ) between the given electrical network (1) and the non-linear and linear electrical loads (2), the LCL output filter (11) being dimensioned so as to block the harmonic components due to the switching of the inverter (9);
- a control unit (12) comprising a reference current calculation unit (25), the reference currents comprising :

i. at least one non-active disturbance current intended to be injected at the connection point in phase opposition to cancel, on the power system side (1), the signal disturbances generated by the non-linear and linear loads (2),
presenting all or part of the harmonics, and at the fundamental frequency all or part of the reactive current and/or unbalanced current,
ii. at least one active current for charging the storage element (3),
iii. at least one active current corresponding to a maximum power point of the renewable energy generation power unit (100),
the control unit (12) also comprising:

a switching control device (21) that controls the switching of the inverter (9) via a non-linear controller (23) by continuous sliding mode, adapted to the LCL type filter (11) that provides closed-loop control of the entire frequency band from 50 to 2500 Hz for the injection of the non-active disturbance current and the active current,
according to the identification of the reference currents by the calculation unit (25);
the switching control of the inverter (9) being performed so as to allow to pass through the output filter unit (10) at the connection point (C ):
some or all of the injected non-active disturbance currents in phase opposition comprising harmonic currents, as well as reactive and unbalanced currents at the fundamental frequency, in the non-linear and linear electrical loads (2) to satisfy the non-active energy consumption demand of the non-linear and linear electrical loads (2), while depolluting the electrical network (1) of these non-active disturbing currents;

• an active current corresponding to a point of maximum power available within the renewable energy generation power unit (100), to satisfy the active energy consumption demand of the non-linear and linear electrical loads (2), while ensuring the recharging of the storage element (3).

2. The compensation device (7) according to claim 1, wherein the switching control of the inverter (9) is performed in such a way as to let pass also through the output filter unit (10):
a part of the active current, in the given electrical network (1) devoid then of the non-active disturbing currents, when the output of the renewable energy generating power unit (100) is higher than the power consumed by the non-linear and linear electrical loads (2).

3. The compensation device (7) according to any of claims 1 to 2, wherein the renewable energy generating power unit (100) is coupled without a chopper or other power electronics devices to the energy storage element (3).

4. The compensation device (7) according to any of claims 1 to 3, wherein the control unit (12) comprises:

- a chopper configured to maintain a predefined constant DC voltage across the energy storage element (3) of the inverter (9), independent of the voltage level of the renewable energy source (100) to ensure unchanged harmonic filtering,

- a double chopper for the case of an islanded power system.

**5.** The compensation device (7) according to any of claims 1 to 4, wherein the control unit (12) comprises a 1st order or higher order continuous sliding mode controller having a suitable sliding surface of 1st order, 2nd order, 3rd order or others.

**6.** The compensation device (7) according to any of claims 1 to 5, wherein the control unit (12) comprises at least one of the following two sliding mode controllers:

- one comprising a Sigmoid approximated Sign function with a 2nd order adapted sliding surface; and
- the other is based on a method of artificially increasing the relative degree comprising a Sign function with a matched 3rd order sliding surface, followed by an integrator.

**7.** The compensation device (7) according to any of claims 1 to 6, wherein the switching driver (21) comprises a pulse width modulation (PWM) device, wherein the control is modulated, in order to operate the inverter (9) at a fixed switching frequency.

**8.** The compensation device (7) according to any of claims 1 to 7, wherein the control unit (12) comprises a PI-type controller (62), or the like, with an output that represents the maximum power of the renewable energy generating power unit (100), for regulating the DC voltage of the storage element (3) while ensuring tracking of the maximum active power point of the renewable energy generating power unit (100),
the compensation device (7) having a DC voltage regulation loop across the capacitive storage element (3) that provides the maximum power output to the controller (62), the voltage across the capacitive storage element (3) being equal to the maximum power voltage of the renewable energy power unit (100).

**9.** The compensation device (7) according to claims 2 and 3 and according to claim 8, comprising a reference current calculation unit (25-A) configured to determine the non-active disturbance current flowing in the load (2), and a reference current calculation unit (25-B) configured to calculate, based solely on the power, the voltage of the maximum active power point of the renewable energy generating power unit (100).

**10.** An electrical system comprising a power supply network (1), non-linear/linear loads (2), at least one renewable energy generating power unit (100), and a compensation device (7) according to any of the preceding claims 1 to 9.

**11.** The system according to claim 10, wherein the renewable energy generating power unit (100) is:

- selected from the following list: one or more photovoltaic panels, wind turbine(s), fuel cell(s) or the like,
- coupled, directly to a capacitive storage element (3) in case of DC generation, or via an AC/DC power rectifier in case of AC generation.

**12.** The system of any of claims 10 to 11, wherein the grid is selected from the following list: the main power grid, a local micro power grid islanded or connected to the main power grid, or an on-board power grid.

**13.** The system of any of claims 10 to 12, further comprising an intelligent building (27), and wherein the control unit (12) is connected to a decentralized management unit (70) of the intelligent building (27), the control unit (12) compares the maximum available power of the renewable energy generating power unit (100) with the total load of the intelligent building (27).

**14.** The system of claim 13, wherein the control-command unit (12) is configured to optimize the consumption of the various devices operating within this intelligent building (27) by distributing the loads corresponding to the non-linear/linear loads according to at least two modes of operation:

- a first distribution mode called adapted consumption mode in which the control unit (12) drives the decentralized management unit (70) of the intelligent building (27) in such a way as to adapt the consumption of the intelligent building with the production of the renewable energy generating power unit (100), so that the total load curve of the intelligent building has a maximum simultaneity factor corresponding to the operation of all the loads of the building at the same time, within the limit of the renewable energy produced,
- in the event of insufficient production of renewable energy, a second distribution mode called modulated consumption mode in which the control unit (12) controls the decentralized management unit (70) of the intelligent building (27) in such a way as to modulate the consumption of the appliances of the intelligent building (27) in order to tend to a total load curve of the intelligent building that is substantially constant as a function of time,
- in the same case and if the electrical network (1) is intelligent, a third distribution mode adapted to the production of the intelligent electrical network (1) is possible.

15. The system according to any of claims 10 to 14, further comprising:

- a local grid (28) connected to the grid (1), and
- conventional (fossil) power generation units (80), and
- a semi-decentralized management system (29), and
- a plurality of renewable energy generating power units (100) connected to the local network (28) by a compensation device (7), each compensation device (7) being connected to the semi-decentralized management system (29) to which it communicates information concerning the current and future energy production of each of the renewable energy generating power units (100), and
- a plurality of consumption stations corresponding to the non-linear and linear loads (2), each of the consumption stations being connected to the local network (28) and equipped with a compensation device (7), connected to the semi-decentralized management system (29) to which it communicates information concerning the instantaneous consumption and the consumption to come according to the programmed operation of the consumption stations,
- a plurality of renewable energy generating power units (100) and linear and non-linear loads (2) of the smart buildings (27) with positive energy, which ensure selfconsumption and where the possible surplus of energy is stored or exchanged with the other smart buildings or delivered to the local network (28) via the command and control unit (12) of the compensation device (7), in coordination with the semi-decentralized management system (29) in case of an exchange with the local network (28).

16. The system of claim 15, wherein the semi-decentralized management system (29) is further configured to provide economic generation dispatch of the conventional power generation units (80).

17. The system of claim 16, wherein the semi-decentralized management system (29) is further configured to intervene, only as needed, when the total energy demand within the local grid (28) is substantially greater than the total generation, with the decentralized control units (70) of the intelligent buildings (27), via the control units (12) of the compensation devices (7), to switch them to a modulated consumption mode.

18. The system of claim 17, wherein the semi-decentralized management system (29) is further configured to control the distribution to the local grid (28) of power from the grid (1) if the estimated total generation does not cover the demand.

**FIG. 1b**

**FIG. 1a**

**FIG. 2**

FIG. 3

**FIG. 4**

EP 3 591 784 B1

FIG. 5

**FIG. 6**

# FIG. 7

EP 3 591 784 B1

**FIG. 8**

EP 3 591 784 B1

FIG. 9

**FIG. 10**

FIG. 11

FIG. 12

**FIG. 13a**

**FIG. 13b**

**FIG. 13c**

# FIG. 14

$$I_{inj}/I_{ref}(s)$$

EP 3 591 784 B1

FIG. 15

## FIG. 16

Réseau      Transformateur      Ligne électrique

## FIG. 17

FIG. 18

## FIG. 19a

---- IL1 ······ IL2 —— IL3

## FIG. 19b

---- Vs1 ······ Vs2 —— Vs3

## FIG. 19c

---- PF1 ······ PF2 —— PF3

## FIG. 19d

---- THDi1     ······· THDi2     —— THDi3

## FIG. 19e

---- THDV1     ······· THDv2     —— THDv3

## FIG. 19f

---- (%) I5-ph1     ······· (%) I5-ph2     —— (%) I5-ph3

## FIG. 19g

---- (%) I7-ph1 ········ (%) I7-ph2 —— (%) I7-ph3

## FIG. 19h

---- (%) I11-ph1 ········ (%) I11-ph2 —— (%) I11-ph3

## FIG. 19i

---- (%) I13-ph1 ········ (%) I13-ph2 —— (%) I13-ph3

## FIG. 20a

## FIG. 20b

# FIG. 20c

## FIG. 20d

## FIG. 20e

## FIG. 20f

FIG. 21

FIG. 22

FIG. 23

Caractéristiques courant-tension

Point de puissance maximum

$I_{CC}$

$I_{MPP}$

Courant (A)

Tension (V)

$U_{MPP}$

$U_{CO}$

Point de puissance maximum

Caractéristiques puissance-tension

$P_{MPP}$

Puissance (W)

Tension (V)

$U_{MPP}$

$U_{CO}$

EP 3 591 784 B1

FIG. 24

# FIG. 25

EP 3 591 784 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016329714 A1
- CN 201813171 U
- US 20130030590 A1
- CN 102299556 A